(19) Europäisches Patentamt
European Patent Office
Office européen des brevets

(11) **EP 4 757 394 A1**

(12) **EUROPEAN PATENT APPLICATION**
published in accordance with Art. 153(4) EPC

(43) Date of publication:
**10.06.2026 Bulletin 2026/24**

(21) Application number: **23947176.6**

(22) Date of filing: **03.08.2023**

(51) International Patent Classification (IPC):
*H04W 24/10* (2009.01)

(52) Cooperative Patent Classification (CPC):
**H04W 24/10**

(86) International application number:
**PCT/CN2023/111097**

(87) International publication number:
**WO 2025/025232 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: Shenzhen Transsion Holdings Co., Ltd.
Shenzhen, Guangdong 518057 (CN)

(72) Inventors:
• WANG, Sha
Shenzhen, Guangdong 518057 (CN)
• XIE, Yili
Shenzhen, Guangdong 518057 (CN)
• HUANG, Wei
Shenzhen, Guangdong 518057 (CN)

(74) Representative: Elzaburu S.L.P.
Paseo de la Castellana 259C
Torre de Cristal, planta 28
28046 Madrid (ES)

(54) **PROCESSING METHOD, COMMUNICATION DEVICE AND STORAGE MEDIUM**

(57)     The present application provides a processing method, a communication device, and a storage medium. The processing method includes: generating or determining a channel state information report based on a spatial domain adaption scenario type. The present application provides a method to enable a single channel state information report to contain multiple channel state information for different spatial domain modes, which avoids the requirement to separately report multiple channel state information for different spatial domain modes, and thus improves transmission efficiency and/or saves resources.

Generating or determining a channel state information report based on a spatial domain adaption scenario type — S1

FIG. 5

## Description

### TECHNICAL FIELD

The present application relates to the technical field of communication technologies and, in particular, to a processing method, a communication device, and a storage medium.

### BACKGROUND

In 5G NR systems, CSI-RS (Channel State Information-Reference Signal, Channel State Information-Reference Signal) is an important reference signal. As wireless channel conditions may change continuously, a terminal device needs to feed back the downlink channel condition to a network device via CSI (Channel State Information, Channel State Information), so that the network device takes channel quality into account during downlink scheduling.

During conception and implementation of the present application, the inventors have found at least the following problems. Existing protocols specify the content to be reported and the CSI mapping mode for reporting CSI with the same spatial domain mode in a single CSI report. However, when a CSI report contains multiple CSI for different spatial domain modes, it remains unclear which CSI should be included in that CSI report and how such CSI should be mapped. Consequently, multiple CSI for different spatial domain modes need to be reported separately, which may impact transmission efficiency and/or lead to waste of resources.

The foregoing description is provided to give general background information and does not necessarily constitute the prior art.

### TECHNICAL SOLUTION

A main objective of the present application is to provide a processing method, a communication device, and a storage medium, aiming to provide a method to enable a single CSI report to contain multiple CSI for different spatial domain modes, thereby improving transmission efficiency and/or saving resources.

The present application provides a processing method, which is applied to a terminal device (for example, a mobile phone) and includes the following step:

S1, generating or determining a channel state information report based on a spatial domain adaption scenario type.

Optionally, the spatial domain adaptation scenario type includes a Type1 spatial domain adaptation scenario and/or a Type2 spatial domain adaptation scenario.

Optionally, the channel state information report includes channel state information of at least one sub-configuration and/or zero padding bits.

Optionally, the sub-configuration includes a first preset number of sub-configurations and/or a second preset number of sub-configurations.

Optionally, the channel state information includes at least one of a channel state information-reference signal resource indicator, a rank indicator, wideband precoding matrix indicator information, a wideband channel quality indicator for a first transport block, a wideband channel quality indicator for a second transport block, or a sub-configuration index.

Optionally, the method further includes at least one of the following:

the first preset number of sub-configurations include a first reference sub-configuration and/or a second reference sub-configuration;
the second preset number of sub-configurations include a first reference sub-configuration and/or a second reference sub-configuration;
the sub-configuration index includes at least one of a starting sub-configuration index, an ending sub-configuration index, or each sub-configuration index for the second preset number of sub-configurations;
a first reference sub-configuration is a sub-configuration having a largest number of channel state information-reference signal resource indicator antenna ports among the first preset number of sub-configurations;
a second reference sub-configuration is a sub-configuration with a smallest or largest sub-configuration index among the first preset number of sub-configurations;
the first preset number and/or the second preset number is a positive integer;
the second preset number is less than or equal to the first preset number;
the number of zero padding bits is related to the number of information bits reported by each sub-configuration in the first preset number of sub-configurations and the second preset number of sub-configurations;
the number of information bits reported by each sub-configuration is related to the number of bits of a channel state information-reference signal resource indicator corresponding to the sub-configuration.

Optionally, the wideband channel quality indicator for the first transport block includes at least one of the following:

a wideband channel quality indicator for a first transport block of the first reference sub-configuration or the second reference sub-configuration;
wideband differential channel quality indicators for other sub-configurations other than the first reference sub-configuration or the second reference sub-configuration;
a wideband channel quality indicator for a first transport block of the first preset number of sub-configurations or the second preset number of sub-configurations.

Optionally, after step S1, the method further includes:
reporting the channel state information report according to a reporting priority value.

Optionally, the reporting priority value is related to the spatial domain adaption scenario type, and/or, the reporting priority value satisfies a first rule.

The present application further provides a processing method, which is applied to a network device (for example, a base station) and includes the following step:
S2, receiving a channel state information report, where the channel state information report is generated or determined by a terminal device based on a spatial domain adaption scenario type.

Optionally, the spatial domain adaptation scenario type includes a Type1 spatial domain adaptation scenario and/or a Type2 spatial domain adaptation scenario.

Optionally, the channel state information report includes channel state information of at least one sub-configuration and/or zero padding bits.

Optionally, the sub-configuration includes a first preset number of sub-configurations and/or a second preset number of sub-configurations.

Optionally, the channel state information includes at least one of a channel state information-reference signal resource indicator, a rank indicator, wideband precoding matrix indicator information, a wideband channel quality indicator for a first transport block, a wideband channel quality indicator for a second transport block, or a sub-configuration index.

Optionally, the channel state information report is reported by the terminal device according to a reporting priority value.

Optionally, at least one of the following is further included:

the first preset number of sub-configurations include a first reference sub-configuration and/or a second reference sub-configuration;
the second preset number of sub-configurations include a first reference sub-configuration and/or a second reference sub-configuration;
the sub-configuration index includes at least one of a starting sub-configuration index, an ending sub-configuration index, or each sub-configuration index for the second preset number of sub-configurations;
a first reference sub-configuration is a sub-configuration having a largest number of channel state information-reference signal resource indicator antenna ports among the first preset number of sub-configurations;
a second reference sub-configuration is a sub-configuration with a smallest or largest sub-configuration index among the first preset number of sub-configurations;
the first preset number and/or the second preset number is a positive integer;
the second preset number is less than or equal to the first preset number;
the number of zero padding bits is related to the number of information bits reported by each sub-configuration in the first preset number of sub-configurations and the second preset number of sub-configurations;
the number of information bits reported by each sub-configuration is related to the number of bits of a channel state information-reference signal resource indicator corresponding to the sub-configuration.

Optionally, the wideband channel quality indicator for the first transport block includes at least one of the following:

a wideband channel quality indicator for a first transport block of the first reference sub-configuration or the second reference sub-configuration;
wideband differential channel quality indicators for other sub-configurations other than the first reference sub-configuration or the second reference sub-configuration;
a wideband channel quality indicator for a first transport block of the first preset number of sub-configurations or the second preset number of sub-configurations.

Optionally, the reporting priority value is related to the spatial domain adaption scenario type, and/or, the reporting priority value satisfies a first rule.

The present application further provides a communication device, including: a memory, a processor and a processing program that is stored on the memory and is runnable on the processor. When the processing program is executed by the processor, the steps of any one of the aforementioned processing methods are implemented.

The communication device in the present application may be a terminal device (for example, a mobile phone) or a network device (for example, a base station). The specific reference should be clarified based on the context.

The present application further provides a storage medium in which a computer program is stored, and when the computer program is executed by a processor, the steps of any one of the aforementioned processing methods are implemented.

In the technical solutions of the present application, by generating or determining a channel state information report based on a spatial domain adaption scenario type, a method is provided to enable a single channel state information report to contain multiple channel state information for different spatial domain modes, which avoids the requirement to separately report multiple channel state information for different spatial domain modes, and thus improves transmission efficiency and/or saves resources.

## BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.

FIG. 1 is a schematic diagram of a hardware structure of a mobile terminal which implements various embodiments of the present application.
FIG. 2 is an architecture diagram of a communication network system provided by an embodiment of the present application.
FIG. 3 is a schematic diagram of a hardware structure of a controller 140 provided by the present application.
FIG. 4 is a schematic diagram of a hardware structure of a network node 150 provided by the present application.
FIG. 5 is a schematic flowchart of a processing method according to a first embodiment.
FIG. 6 is a schematic diagram of a reference sub-configuration according to a second embodiment.
FIG. 7 is a schematic diagram of a sub-configuration according to a sixth embodiment.
FIG. 8 is a schematic flowchart of a processing method according to a tenth embodiment.
FIG. 9 is a schematic flowchart of a processing method according to an eleventh embodiment.
FIG. 10 is a first schematic structural diagram of a processing apparatus provided by an embodiment of the present application.
FIG. 11 is a second schematic structural diagram of a processing apparatus provided by an embodiment of the present application.
FIG. 12 is a schematic structural diagram of a communication device provided by an embodiment of the present application.

Implementation of the objectives, functional features, and advantages of the present application will be further described in combination with embodiments and with reference to the accompanying drawings. Through the above drawings, explicit embodiments of the present application have been shown, and more detailed descriptions will be provided in the following. These drawings and textual descriptions are not intended to limit the scope of the concepts of the present application in any way, but to explain the concepts of the present application to those skilled in the art through reference to specific embodiments.

## DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatuses and methods consistent with aspects of the present application as detailed in the appended claims.

It should be noted that, herein, the terms "include", "contain", or any other variation thereof are intended to cover a non-exclusive inclusion, such that a process, method, article, or apparatus that includes a list of elements does not include only those elements but may also include other elements not expressly listed or inherent to such process, method, article, or apparatus. Without further limitation, an element defined by the phrase "include a..." does not preclude the presence of additional identical elements in the process, method, article, or apparatus that includes the element. And/or, components, features and elements with the same name in different embodiments of the present application may have the same meaning or may have different meanings. Their specific meanings need to be determined by their interpretations within the specific embodiments or in further combination with the context of that specific embodiment.

It should be understood that although the terms "first", "second", "third", etc. may be used herein to describe various information, such information should not be limited by these terms. These terms are only used to distinguish information of the same type from another. For example, without departing from the scope of the specification, first information may also be referred to as second information, and similarly, second information may also be referred to as first information. Depending on the context, the word "if" as used herein may be interpreted as "when" or "upon" or "in response to determining". Furthermore, as used herein, the singular forms "a/an", "one" and "the" are intended to include the plural forms as well, unless the context clearly indicates otherwise. It should be further understood that the terms "contain" and "include" indicate the presence of the stated features, steps, operations, elements, components, items, kinds, and/or groups, but do not preclude the presence, occurrence or addition of one or more other features, steps, operations, elements, components, items, kinds, and/or groups. Terms used in the present application such as "or", "and/or", "include at least one of the following", etc. may be interpreted as inclusive or meaning any one or any combination. For example, "include at least one of the following: A, B, C" means "any one of the following: A; B; C; A and B; A and C; B and C; A and B and C". As another example, "A, B or C" or "A, B and/or C" means "any one of the following: A; B; C; A and B; A and C; B and C; A and B and C". An exception to this definition occurs only when a combination of elements, functions, steps, or operations is inherently mutually exclusive in some manner.

It should be understood that although various steps in the flowcharts in the embodiments of the present application are shown in an order indicated by arrows, these steps are not necessarily performed in the order indicated by the arrows. Unless explicitly stated herein, the execution of these steps is not strictly limited in order and may be performed in other orders. Moreover, at least a portion of the steps in the figures may include multiple sub-steps or stages, which are not necessarily executed at the same time but may be executed at different times. Their execution order is not necessarily sequential, and they may be performed alternately or in rotation with other steps or at least a portion of sub-steps or stages of other steps.

Depending on the context, the words "if", "when" as used herein may be interpreted as "when" or "upon" or "in response to determining" or "in response to detecting". Similarly, depending on the context, the phrases "if it is determined" or "if (a stated condition or event) is detected" may be interpreted as "when it is determined" or "in response to determining" or "when (a stated condition or event) is detected" or "in response to detecting (a stated condition or event)".

It should be noted that, herein, step designations such as S1, S2, etc. are used for the purpose of describing the corresponding content more clearly and concisely, and do not constitute a substantive limitation on the order. In specific implementation, those skilled in the art may execute S2 before S1, etc., but all such variations shall fall within the protection scope of the present application.

It should be understood that the specific embodiments described herein are merely intended to explain the present application and are not intended to limit the present application.

In the following description, suffixes such as "module", "component", or "unit" used to denote elements are only for facilitating the description of the present application and have no specific meaning per se. Therefore, "module", "component", or "unit" may be used interchangeably.

The communication device in the present application may be a terminal device (for example, a mobile phone) or a network device (for example, a base station). The specific reference should be clarified based on the context.

The terminal device may be implemented in various forms. For example, the terminal device described in the present application may include a smart terminal device such as a mobile phone, a tablet computer, a laptop, a palmtop computer, a personal digital assistant (Personal Digital Assistant, PDA), a portable media player (Portable Media Player, PMP), a navigation apparatus, a wearable device, a smart bracelet, a pedometer, etc., as well as a fixed terminal device such as a digital TV, a desktop computer, etc.

In the following description, a mobile terminal will be used as an example for illustration. Those skilled in the art will understand that the configurations according to the embodiments of the present application can also be applied to a fixed terminal device, except for an element specifically for mobile purposes.

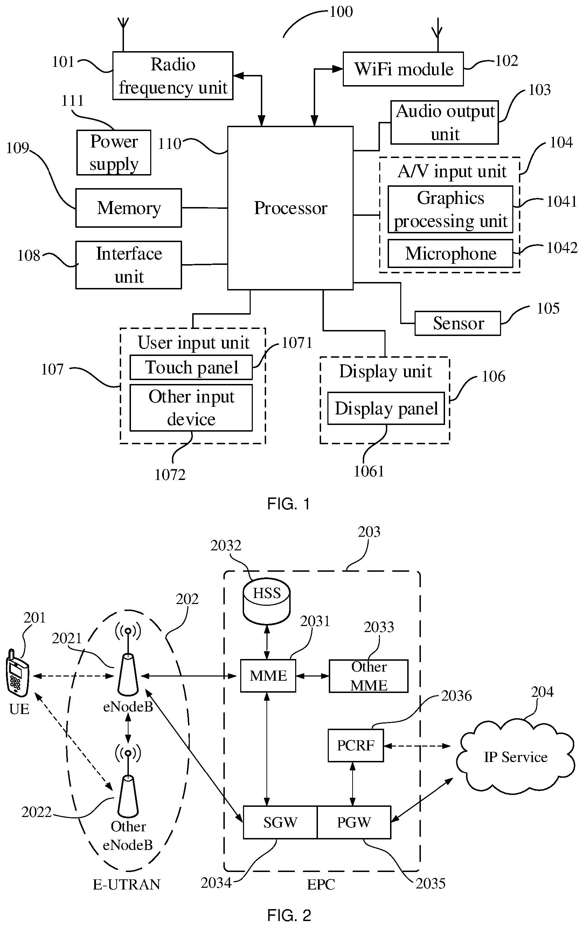

Please refer to FIG. 1, which is a schematic diagram of a hardware structure of a mobile terminal which implements various embodiments of the present application. The mobile terminal 100 may include: an RF (Radio Frequency, Radio frequency) unit 101, a WiFi module 102, an audio output unit 103, an A/V (audio/video) input unit 104, a sensor 105, a display unit 106, a user input unit 107, an interface unit 108, a memory 109, a processor 110, a power supply 111, and other components. Those skilled in the art will understand that the structure of the mobile terminal shown in FIG. 1 does not constitute a limitation on the mobile terminal. The mobile terminal may include more or fewer components than illustrated, combine some components, or have different component arrangements.

The components of the mobile terminal will be described in detail with reference to FIG. 1.

The radio frequency unit 101 may be configured to receive and transmit signals during information or call communication. Specifically, after receiving downlink information from a base station, the radio frequency unit 101 passes the same to the processor 110 for processing. Additionally, the radio frequency unit 101 transmits uplink data to the base station. Generally, the radio frequency unit 101 includes, but is not limited to, an antenna, at least one amplifier, a transceiver, a coupler, a low noise amplifier, a duplexer, etc. And/or, the radio frequency unit 101 may also communicate with a network and other devices via wireless communication. The aforementioned wireless communication may use any communication standard or protocol, including but not limited to GSM (Global System of Mobile Communication, Global System for Mobile Communication), GPRS (General Packet Radio Service, General Packet Radio Service), CDMA2000 (Code Division Multiple Access 2000, Code Division Multiple Access 2000), WCDMA (Wideband Code Division Multiple Access, Wideband Code Division Multiple Access), TD-SCDMA (Time Division-Synchronous Code Division Multiple Access, Time Division-Synchronous Code Division Multiple Access), FDD-LTE (Frequency Division Duplexing-Long Term Evolution, Frequency Division Duplexing-Long Term Evolution), TDD-LTE (Time Division Duplexing-Long Term Evolution, Time Division Duplexing-Long Term Evolution), 5G, and 6G, etc.

WiFi is a short-range wireless transmission technology. Through the WiFi module 102, the mobile terminal can help users send and receive emails, browse web pages, and access streaming media, etc., providing users with wireless broadband Internet access. Although FIG. 1 shows the WiFi module 102, it should be understood that it is not an essential component of the mobile terminal and may be omitted as needed without changing the essence of the invention.

The audio output unit 103 may convert audio data, received by the radio frequency unit 101 or the WiFi module 102, or stored in the memory 109, into audio signals and output them as sound when the mobile terminal 100 is in a call signal reception mode, a call mode, a recording mode, a voice recognition mode, a broadcast reception mode, etc. Moreover, the audio output unit 103 may also provide audio output related to specific functions performed by the mobile terminal 100 (for example, call signal reception sound, message reception sound, etc.). The audio output unit 103 may include a speaker, a buzzer, etc.

The A/V input unit 104 is configured to receive audio or video signals. The A/V input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The processed image frame may be displayed on the display unit 106. The image frame processed by the graphics processing unit 1041 may be stored in the memory 109 (or other storage medium) or transmitted via the radio frequency unit 101 or the WiFi module 102. The microphone 1042 may receive sound (audio data) via the microphone 1042 in operation modes such as a telephone call mode, a recording mode, a voice recognition mode, etc., and can process such sound into audio data. The processed audio (voice) data may be converted into a format that can be transmitted to a mobile communication base station via the radio frequency unit 101 and output in the case of a telephone call mode. The microphone 1042 may implement various types of noise cancellation (or suppression) algorithms to cancel (or suppress) noise or interference generated during receiving and transmitting audio signals.

The mobile terminal 100 further includes at least one type of sensor 105, such as a light sensor, a motion sensor, and other sensors. Optionally, the light sensor includes an ambient light sensor and a proximity sensor. Optionally, the ambient light sensor may adjust the brightness of the display panel 1061 according to the brightness of ambient light. The proximity sensor may turn off the display panel 1061 and/or backlight when the mobile terminal 100 is moved to the ear. As a type of a motion sensor, an accelerometer sensor can detect the magnitude of acceleration in various directions (generally three axes). When it is stationary, it can detect the magnitude and direction of gravity, and can be used for applications recognizing the posture of the mobile phone (such as screen orientation switching, related games, magnetometer posture calibration), vibration recognition related functions (such as pedometer, tapping), etc. As for other sensors that may be configured on the mobile phone, such as a fingerprint sensor, a pressure sensor, an iris sensor, a molecular sensor, a gyroscope, a barometer, a hygrometer, a thermometer, an infrared sensor, etc., they will not be detailed here.

The display unit 106 is configured to display information input by the user or information provided to the user. The display unit 106 may include a display panel 1061, which may be configured using a liquid crystal display (Liquid Crystal Display, LCD), an organic light-emitting diode (Organic Light-Emitting Diode, OLED), or other forms.

The user input unit 107 may be configured to receive input numeric or character information and generate key signal inputs related to user settings and functional control of the mobile terminal. Optionally, the user input unit 107 may include a touch panel 1071 and other input devices 1072. The touch panel 1071, also known as a touch screen, may collect touch operations of the user on or near it (for example, operations performed by a user using a finger, stylus, or any suitable object or accessory on or near the touch panel 1071) and drive corresponding connection apparatuses according to preset programs. The touch panel 1071 may include two parts: a touch detection apparatus and a touch controller. Optionally, the touch detection apparatus detects the user's touch orientation and detects signals brought by the touch operation, then transmits the signals to the touch controller. The touch controller receives touch information from the touch detection apparatus, converts it into contact coordinates, and transmits them to the processor 110, and can also receive and execute commands from the processor 110. And/or, the touch panel 1071 may be implemented in various types such as resistive, capacitive, infrared, and surface acoustic wave. In addition to the touch panel 1071, the user input unit 107 may also include other input devices 1072. Optionally, the other input devices 1072 may include, but are not limited to, one or more of a physical keyboard, a function key (such as a volume control button, a switch button, etc.), a trackball, a mouse, a joystick, etc., which is not specifically limited here.

Optionally, the touch panel 1071 may cover the display panel 1061. When the touch panel 1071 detects a touch operation on or near it, it transmits the information to the processor 110 to determine the type of touch event. Then, the processor 110 provides corresponding visual output on the display panel 1061 according to the type of touch event. Although the touch panel 1071 and the display panel 1061 are implemented as two independent components to realize the input and output functions of the mobile terminal in FIG. 1, in some embodiments, the touch panel 1071 and the display panel 1061 may be integrated to realize the input and output functions of the mobile terminal, which is not specifically limited here.

The interface unit 108 serves as an interface through which at least one external apparatus can connect to the mobile terminal 100. For example, the external apparatus may include a wired or wireless headphone port, an external power supply (or battery charger) port, a wired or wireless data port, a memory card port, a port for connecting an apparatus with an identification module, an audio input/output (I/O) port, a video I/O port, an earphone port, etc. The interface unit 108 may be configured to receive input (for example, data information, power, etc.) from the external apparatus and transmit the received input to one or more elements within the mobile terminal 100, or may be configured to transmit data between the mobile terminal 100 and the external apparatus.

The memory 109 may be configured to store a software program and various data. The memory 109 may mainly include a program storage area and a data storage area. Optionally, the program storage area may store an operating system, application programs required for at least one function (such as sound playback function, image playback function, etc.), etc. The data storage area may store data created according to the use of the mobile phone (such as audio data, phonebook, etc.). And/or, the memory 109 may include a high-speed random access memory and may also include a non-volatile memory, for example, at least one magnetic disk storage device, flash memory device, or other volatile solid-state storage devices.

The processor 110 is a control center of the mobile terminal, connecting various parts of the entire mobile terminal through various interfaces and lines. By running or executing software programs and/or modules stored in the memory 109 and calling data stored in the memory 109, it performs various functions of the mobile terminal and processes data, thereby monitoring the mobile terminal as a whole. The processor 110 may include one or more processing units. Preferably, the processor 110 may integrate an application processor and a modem processor. Optionally, the application processor mainly handles the operating system, the user interface, and the application programs, etc., while the modem processor mainly handles wireless communication. It is understood that the aforementioned modem processor may also not be integrated into the processor 110.

The mobile terminal 100 may further include a power supply 111 (such as a battery) that supplies power to various components. Preferably, the power supply 111 may be logically connected to the processor 110 through a power management system, thereby implementing functions such as charging management, discharging management, and power consumption management through the power management system.

Although not shown in FIG. 1, the mobile terminal 100 may further include a Bluetooth module, etc., which will not be detailed here.

For the convenience of understanding the embodiments of the present application, a communication network system on which the mobile terminal of the present application is based is described below.

Please refer to FIG. 2, which is an architecture diagram of a communication network system provided by an embodiment of the present application. The communication network system is an NR (New Radio, New Radio) system of universal mobile communication technology. The NR system includes a UE (User Equipment, User Equipment) 201, an E-UTRAN (Evolved UMTS Terrestrial Radio Access Network, Evolved UMTS Terrestrial Radio Access Network) 202, an EPC (Evolved Packet Core, Evolved Packet Core) 203, and an operator's IP service 204, which are sequentially connected in communication.

Optionally, the UE 201 may be the aforementioned terminal device 100, which will not be detailed here.

The E-UTRAN 202 includes an eNodeB 2021 and other eNodeB 2022, etc. Optionally, the eNodeB 2021 may be connected to other eNodeB 2022 via a backhaul (backhaul) (such as an X2 interface). The eNodeB 2021 is connected to the EPC 203 and may provide the UE 201 with access to the EPC 203.

The EPC 203 may include an MME (Mobility Management Entity, Mobility Management Entity) 2031, an HSS (Home Subscriber Server, Home Subscriber Server) 2032, other MME 2033, an SGW (Serving Gate Way, Serving Gate Way) 2034, a PGW (PDN Gate Way, Packet Data Network Gate Way) 2035, and a PCRF (Policy and Charging Rules Function, Policy and Charging Rules Function) 2036, etc. Optionally, the MME 2031 is a control node that handles signaling between the UE 201 and the EPC 203, providing bearer and connection management. The HSS 2032 is configured to provide some registers to manage functions such as a home location register (not shown in the figure) and store some user-specific information such as service features, data rates, etc. All user data can be sent via the SGW 2034. The PGW 2035 may provide IP address allocation for the UE 201 and other functions. The PCRF 2036 is a policy and charging control policy decision point for service data flows and IP bearer resources. It selects and provides available policy and charging control decisions for the policy and charging enforcement function unit (not shown in the figure).

The IP service 204 may include Internet, intranet, IMS (IP Multimedia Subsystem, IP Multimedia Subsystem) or other IP services.

Although the LTE system is taken as an example for introduction in the above, those skilled in the art should understand that the present application is not only applicable to the LTE system, but also to other wireless communication systems, such as a GSM, a CDMA2000, a WCDMA, a TD-SCDMA, 5G, and a future new network system (such as 6G), etc., which are not limited here.

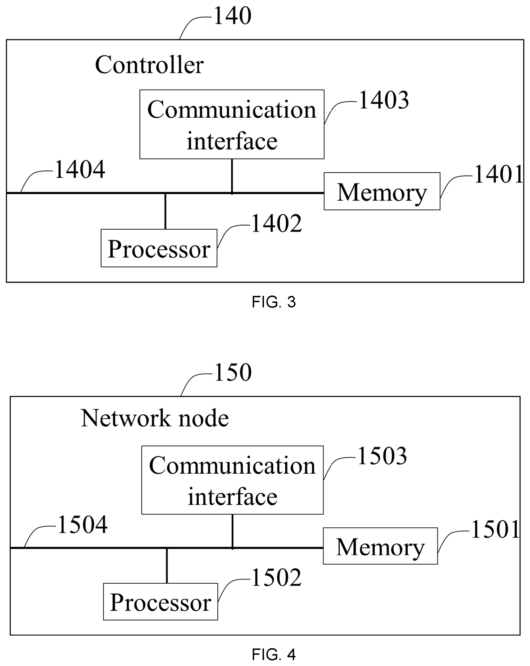

FIG. 3 is a schematic diagram of a hardware structure of a controller 140 provided by the present application. The controller 140 includes: a memory 1401 and a processor 1402. The memory 1401 is configured to store program instructions, and the processor 1402 is configured to call the program instructions in the memory 1401 to execute the steps performed by the controller in the first method embodiment. The implementation principles and beneficial effects are similar and will not be detailed here.

Optionally, the aforementioned controller further includes a communication interface 1403, which may be connected to the processor 1402 via a bus 1404. The processor 1402 may control the communication interface 1403 to implement the receiving and transmitting functions of the controller 140.

FIG. 4 is a schematic diagram of a hardware structure of a network node 150 provided by the present application. The network node 150 includes: a memory 1501 and a processor 1502. The memory 1501 is configured to store program instructions, and the processor 1502 is configured to call the program instructions in the memory 1501 to execute the steps performed by the first node in the first method embodiment. The implementation principles and beneficial effects are similar and will not be detailed here.

Optionally, the aforementioned controller further includes a communication interface 1503, which may be connected to the processor 1502 via a bus 1504. The processor 1502 may control the communication interface 1503 to implement the receiving and transmitting functions of the network node 150.

The integrated modules implemented in the form of software functional modules as described above may be stored in a computer-readable storage medium. The software functional modules are stored in a storage medium, which includes several instructions to enable a computer device (which may be a personal computer, a server, a network device, etc.) or a processor (English: processor) to perform some steps of the methods in various embodiments of the present application.

The embodiments may be implemented entirely or partially through software, hardware, firmware, or any combination thereof. When implemented in software, the embodiment may be entirely or partially embodied as a computer program product. The computer program product includes one or more computer instructions. When loaded and executed on a computer, the computer program instructions entirely or partially generate the processes or functions according to the embodiments of the present application. The computer may be a general-purpose computer, a special-purpose computer, a computer network, or other programmable apparatuses. The computer instructions may be stored in a storage medium or transmitted from one storage medium to another storage medium. For example, the computer instructions may be transmitted from a website site, a computer, a server, or a data center to another website site, computer, server, or data center via wired means (for example, coaxial cable, optical fiber, digital subscriber line (DSL)) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid-state disk, solid-state disk, SSD), etc.

Various embodiments of the present application are proposed based on the hardware structure of the aforementioned mobile terminal and the communication network system.

First Embodiment

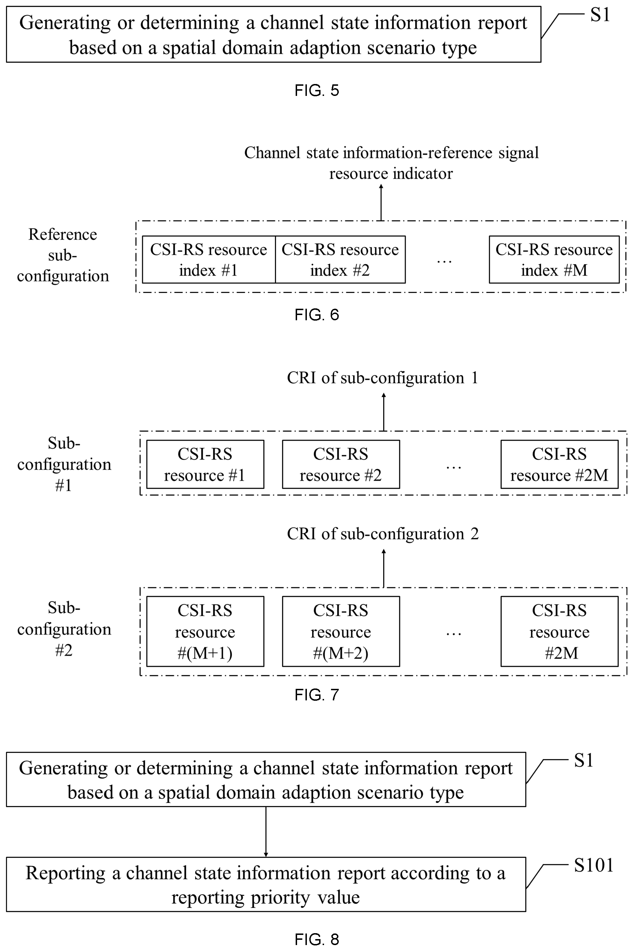

Referring to FIG. 5, FIG. 5 is a schematic flowchart of a processing method according to a first embodiment. The processing method of this embodiment of the present application may be applied to a terminal device (for example, a mobile phone), and include the following step:

S1, generating or determining a channel state information report based on a spatial domain adaption scenario type.

In the embodiment of the present application, a spatial domain (Spatial Domain, SD) adaptation mode, also called as a spatial domain mode, corresponds to a mapping mode from antenna elements to logical antenna ports.

Optionally, the spatial domain adaptation scenario type includes a Type1 spatial domain (Type1 SD) adaptation scenario and/or a Type2 spatial domain (Type2 SD) adaptation scenario.

Optionally, for a Type1 SD adaption scenario, a spatial domain adaption mode corresponds to a specific number of CSI-RS (Channel State Information-Reference Signal, Channel State Information-Reference Signal) antenna ports.

Optionally, for a Type2 SD adaption scenario, a spatial domain adaption mode corresponds to a way of disabling antenna elements mapped to logical antenna ports.

Optionally, for a Type2 SD adaption scenario, in a case, a spatial domain adaption mode is denoted as A and another spatial domain adaption mode is denoted as B, and it is assumed that each antenna port of A and B corresponds to two antenna elements. For the antenna elements corresponding to logical antenna ports of A and B, disabled positions of antenna elements corresponding to at least one antenna port are different. Thus, assuming the disabled antenna elements of antenna port X of A and B are different, if A disables antenna element #1 of the antenna port X, then B disables antenna element #2 of the antenna port X.

Optionally, a spatial domain adaptation mode corresponds to a sub-configuration.

Optionally, the channel state information report includes channel state information of at least one sub-configuration and/or zero padding bits.

Optionally, the sub-configuration includes a first preset number of sub-configurations and/or a second preset number of sub-configurations. In the embodiments of the present application, the first preset number is denoted as L, and the second preset number is denoted as N for explanation.

Optionally, the first preset number L and/or the second preset number N is a positive integer.

Optionally, the second preset number N is less than or equal to the first preset number L.

Optionally, the channel state information report includes channel state information of at least one sub-configuration and/or zero padding bits.

Optionally, the channel state information includes at least one of a channel state information-reference signal resource indicator (CSI-RS resource indicator, CRI), a rank indicator (Rank Indication, RI), wideband precoding matrix (Precoding Matrix Indicator, PMI) indicator information, a wideband channel quality (Channel Quality Indicator, CQI) indicator for the first transport block (Transport Block, TB), a wideband channel quality indicator for the second transport block, or a sub-configuration index.

Optionally, the first preset number of sub-configurations include a first reference sub-configuration and/or a second reference sub-configuration.

Optionally, the second preset number of sub-configurations include a first reference sub-configuration and/or a second reference sub-configuration.

Optionally, the sub-configuration index includes at least one of a starting sub-configuration index, an ending sub-configuration index, or each sub-configuration index for the second preset number of sub-configurations.

Optionally, the first reference sub-configuration is a sub-configuration having the largest number of channel state information-reference signal resource indicator antenna ports among the first preset number of sub-configurations.

Optionally, the second reference sub-configuration is a sub-configuration with the smallest or largest sub-configuration index among the first preset number of sub-configurations.

Optionally, the number of zero padding bits is related to the number of information bits reported by each sub-configuration in the first preset number of sub-configurations and the second preset number of sub-configurations.

Optionally, the number of information bits reported by each sub-configuration is related to the number of bits of a channel state information-reference signal resource indicator corresponding to that sub-configuration.

Optionally, the wideband channel quality indicator for the first transport block includes at least one of the following:

a wideband channel quality indicator for the first transport block of the first reference sub-configuration or the second reference sub-configuration;
wideband differential channel quality indicators for the first transport blocks of other sub-configurations other than the first reference sub-configuration or the second reference sub-configuration;
wideband channel quality indicators for the first transport blocks of the first preset number of sub-configurations or the second preset number of sub-configurations.

Optionally, the wideband channel quality indicator for the second transport block includes at least one of the following:

a wideband channel quality indicator for the second transport block of the first reference sub-configuration or the second reference sub-configuration;
wideband differential channel quality indicators for the second transport blocks of other sub-configurations other than the first reference sub-configuration or the second reference sub-configuration;
wideband channel quality indicators for the second transport blocks of the first preset number of sub-configurations or the second preset number of sub-configurations.

Optionally, after generating or determining the channel state information report based on the spatial domain adaptation scenario type, the terminal device may report the channel state information report.

Optionally, during a process of the terminal device reporting the channel state information report, if there are multiple channel state information reports, a reporting priority value associated with each channel state information report needs to be determined, and then each channel state information report is reported according to the reporting priority value.

Optionally, the reporting priority value is related to the spatial domain adaptation scenario type.

Optionally, the reporting priority value satisfies a first rule.

Optionally, the first rule may be a calculation formula (1) for the reporting priority value:

$$Pri_{iCSI}(y,k,c,s,z)=2 \cdot N_{cells} \cdot M_s \cdot y \cdot z + N_{cells} \cdot M_s \cdot k + M_s \cdot c + s + z \quad (1).$$

Through the above solution in this embodiment, specifically by generating or determining the channel state information report based on the spatial domain adaptation scenario type, a method is provided to enable a single channel state information report to contain multiple channel state information for different spatial domain modes, which avoids the requirement to separately report multiple channel state information for different spatial domain modes, and thus improves transmission efficiency and/or saves resources.

Second Embodiment

Based on the first embodiment of the present application, this embodiment discloses a method for generating or determining a channel state information report under a Type1 SD adaptation scenario.

Optionally, the Type1 SD adaptation scenario is a scenario where all antenna elements associated with an antenna port are simultaneously enabled or disabled.

Optionally, multiple sub-configurations under the Type1 SD adaptation scenario are corresponding to a same channel state information-reference signal resource.

Optionally, each channel state information-reference signal resource has a channel state information-reference signal resource index.

Optionally, it is assumed that under the Type1 SD adaptation scenario, a periodic CSI (Channel State Information, Channel State Information) report contains CSI corresponding to all L sub-configurations. The L sub-configurations share a same CRI, and the shared CRI for the L sub-configurations is calculated according to the CSI-RS resources of the first reference sub-configuration.

Optionally, the first reference sub-configuration is a sub-configuration having the largest number of CSI-RS antenna ports among the L sub-configurations.

Optionally, assuming CSI-RS resources corresponding to the first reference sub-configuration are M, the L sub-configurations share the same CRI, which is a preferred CRI value selected from the M CSI-RS resources corresponding to the first reference sub-configuration. Referring to FIG. 6, FIG. 6 is a schematic diagram of a reference sub-configuration according to a second embodiment. As shown in FIG. 6, CSI-RS resources which correspond to the same sub-configuration have the same number of antenna ports, density, CDM (code Division Multiplexing, Code Division Multiplexing) group (group), etc.

Optionally, the periodic CSI report includes at least one of a CRI of the first reference configuration (if reported), RIs of the L sub-configurations (if reported), wideband PMIs of the L sub-configurations (if reported), a wideband CQI for the first TB of the L sub-configurations (if reported) or a wideband CQI for the second TB of the L sub-configurations (if reported).

Optionally, if reported refers to performing the reporting on demand according to the requirement of the report quality (report quality) configured by the base station.

Optionally, it is assumed that the type of CSI report is a periodic CSI report, codebookType (codebook type) is typel-SinglePanel (typel-single panel), pmi-Formatindicator (precoding matrix indicator-format indicator) is set to widebandPMI (wideband precoding matrix indicator), and cqi-Formatindicator (channel quality indicator-format indicator) is set to widebandCQI (wideband channel quality indicator). If the first reference sub-configuration is sub-configuration #1, the content contained in a CSI report (channel state information report) containing L sub-configurations is as shown in Table 1.

Table 1 First example table of content in channel state information report

| Channel state information report number | CSI fields |
|---|---|
| CSI report #n | |
| | CRI of first reference sub-configuration (if reported) |
| | RI of first reference sub-configuration (if reported) |
| | RI of sub-configuration #2 (if reported) |
| | ... |
| | RI of sub-configuration #L (if reported) |
| | Zero padding bits Op |
| | PMI wideband information fields X1 of first reference sub-configuration (if reported) |
| | PMI wideband information fields X2 of first reference sub-configuration (if reported) |
| | PMI wideband information fields X1 of sub-configuration #2 (if reported) |
| | PMI wideband information fields X2 of sub-configuration #2 (if reported) |
| | ... |
| | PMI wideband information fields X1 of sub-configuration #L (if reported) |
| | PMI wideband information fields X2 of sub-configuration #L (if reported) |
| | Wideband CQI for first TB of first reference sub-configuration (if reported) |
| | Wideband CQI for first TB of sub-configuration #2 (if reported) |
| | ... |
| | Wideband CQI for first TB of sub-configuration #L (if reported) |
| | Wideband CQI for second TB of first reference sub-configuration (if reported) |
| | Wideband CQI for second TB of sub-configuration #2 (if reported) |
| | ... |
| | Wideband CQI for second TB of sub-configuration #L (if reported) |

Optionally, the bitwidths occupied by the CRI of the first reference sub-configuration, the RI of sub-configuration i, and the wideband CQI for the first and/or second TB of sub-configuration i can be found in Table 2 and Table 3.

Table 2 First example table of content of first reference sub-configuration

| Domain | Bitwidth | | | | |
|---|---|---|---|---|---|
| | One antenna port | Two antenna ports | Four antenna ports | More than four antenna ports | |
| | | | | Rank is 1~4 | Rank is 5~8 |
| CRI of first reference sub-configuration | $\lceil \log_2(M) \rceil$ | $\lceil \log_2(M) \rceil$ | $\lceil \log_2(M) \rceil$ | $\lceil \log_2(M) \rceil$ | $\lceil \log_2(M) \rceil$ |
| RI of sub-configuration i when *codebookType* is set to *type1-SinglePanel* | 0 | $\min\left(1, \lceil \log_2 n_{RI} \rceil\right)$ | $\min\left(2, \lceil \log_2 n_{RI} \rceil\right)$ | $\lceil \log_2 n_{RI} \rceil$ | $\lceil \log_2 n_{RI} \rceil$ |
| RI of sub-configuration i when *reportQuantity* is set to 'cri-RI-CQI' | 0 | 1 | 2 | 3 | 3 |
| Wideband CQI for first TB of sub-configuration i | 4 | 4 | 4 | 4 | 4 |

(continued)

| Domain | Bitwidth | | | | |
|---|---|---|---|---|---|
| | One antenna port | Two antenna ports | Four antenna ports | More than four antenna ports | |
| | | | | Rank is 1~4 | Rank is 5~8 |
| Wideband CQI for second TB of sub-configuration i | 0 | 0 | 0 | 0 | 4 |

Table 3 Second example table of content of first reference sub-configuration

| Domain | Bitwidth |
|---|---|
| RI (Rank Indicator) of sub-configuration i when *codebookType* is set to *typeI-MultiPanel (typeI-multiple panels)* | $\min\left(2, \lceil \log_2 n_{RI} \rceil\right)$ |

Optionally, M is the number of CSI-RS resources corresponding to sub-configuration i, and $n_{RI}$ is the number of allowed rank indicator values.

Optionally, the bitwidth occupied by the PMI of sub-configuration i can be found in Table 4 or Table 5.

Table 4 First example table of bitwidth occupied by PMI of sub-configuration i

| | Wideband PMI information fields $X_1$ | | $i_{1,3}$ | Wideband or subband PMI information fields $X_2$ | |
|---|---|---|---|---|---|
| | $(i_{1,1}, i_{1,2})$ | | | $i_2$ | |
| | codebookMode= 1 | codebookMode= 2 | | codebookMode= 1 | codebookMode= 2 |
| Rank = 1 with >2 CSI-RS ports, $N_2 > 1$ | $\left( \lceil \log_2 N_1 O_1 \rceil , \lceil \log_2 N_2 O_2 \rceil \right)$ | $\left( \left\lceil \log_2 \frac{N_1 O_1}{2} \right\rceil , \left\lceil \log_2 \frac{N_2 O_2}{2} \right\rceil \right)$ | N/A | 2 | 4 |
| Rank = 1 with >2 CSI-RS ports, $N_2 = 1$ | $\left( \lceil \log_2 N_1 O_1 \rceil , \lceil \log_2 N_2 O_2 \rceil \right)$ | $\left( \left\lceil \log_2 \left( \frac{N_1 O_1}{2} \right) \right\rceil, 0 \right)$ | N/A | 2 | 4 |
| Rank=2 with 4 CSI-RS ports, $N_2 = 1$ | $\left( \lceil \log_2 N_1 O_1 \rceil , \lceil \log_2 N_2 O_2 \rceil \right)$ | $\left( \left\lceil \log_2 \left( \frac{N_1 O_1}{2} \right) \right\rceil, 0 \right)$ | 1 | 1 | 3 |
| Rank=2 with >4 CSI-RS ports, $N_2 > 1$ | $\left( \lceil \log_2 N_1 O_1 \rceil , \lceil \log_2 N_2 O_2 \rceil \right)$ | $\left( \left\lceil \log_2 \frac{N_1 O_1}{2} \right\rceil , \left\lceil \log_2 \frac{N_2 O_2}{2} \right\rceil \right)$ | 2 | 1 | 3 |

(continued)

| | Wideband PMI information fields $X_1$ | | | Wideband or subband PMI information fields $X_2$ | |
|---|---|---|---|---|---|
| | $(i_{1,1}, i_{1,2})$ | | $i_{1,3}$ | $i_2$ | |
| | codebookMode= 1 | codebookMode= 2 | | codebookMode= 1 | codebookMode= 2 |
| Rank=2 with >4 CSI-RS ports, $N_2 = 1$ | $\left( \lceil \log_2 N_1 O_1 \rceil, \ \lceil \log_2 N_2 O_2 \rceil \right)$ | $\left( \left\lceil \log_2\left(\frac{N_1 O_1}{2}\right) \right\rceil, 0 \right)$ | 2 | 1 | 3 |
| Rank=3 or 4, with 4 CSI-RS ports | $\left( \lceil \log_2 N_1 O_1 \rceil, \ \lceil \log_2 N_2 O_2 \rceil \right)$ | | 0 | 1 | |
| Rank=3 or 4, with 8 or 12 CSI-RS ports | $\left( \lceil \log_2 N_1 O_1 \rceil, \ \lceil \log_2 N_2 O_2 \rceil \right)$ | | 2 | 1 | |
| Rank=3 or 4 , with >=16 CSI-RS ports | $\left( \left\lceil \log_2 \frac{N_1 O_1}{2} \right\rceil, \ \lceil \log_2 N_2 O_2 \rceil \right)$ | | 2 | 1 | |
| Rank=5 or 6 | $\left( \lceil \log_2 N_1 O_1 \rceil, \ \lceil \log_2 N_2 O_2 \rceil \right)$ | N/ A | 1 | | |
| Rank=7 or 8, $N_1 = 4$, $N_2 =1$ | $\left( \left\lceil \log_2 \frac{N_1 O_1}{2} \right\rceil, \ \lceil \log_2 N_2 O_2 \rceil \right)$ | N/ A | 1 | | |

(continued)

| | Wideband PMI information fields $X_1$ | | | Wideband or subband PMI information fields $X_2$ | |
|---|---|---|---|---|---|
| | $(i_{1,1}, i_{1,2})$ | | $i_{1,3}$ | $i_2$ | |
| | codebookMode= 1 | codebookMode= 2 | | codebookMode= 1 | codebookMode= 2 |
| Rank=7 or 8, $N_1 > 2, N_2 = 2$ | $\left( \left\lceil \log_2 N_1 O_1 \right\rceil, \left\lceil \log_2 \dfrac{N_2 O_2}{2} \right\rceil \right)$ | N/ A | 1 | | |
| Rank=7 or 8, with $N_1 > 4$, $N_2 =1$ or $N_1 = 2$, $N_2 = 2$ or $N_1 > 2, N_2 > 2$ | $\left( \left\lceil \log_2 N_1 O_1 \right\rceil, \left\lceil \log_2 N_2 O_2 \right\rceil \right)$ | N/ A | 1 | | |
| Note: $(N_1, N_2)$ and $(O_1, O_2)$ are as specified in TS38.214 | | | | | |

EP 4 757 394 A1

Table 5 Second example table of bitwidth occupied by PMI of sub-configuration i

| | Wideband PMI information fields $X_1$ | | | | | Wideband or subband PMI information fields $X_2$ | | | |
|---|---|---|---|---|---|---|---|---|---|
| | $(i_{1,1}, i_{1,2})$ | $i_{1,3}$ | $i_{1,4,1}$ | $i_{1,4,2}$ | $i_{1,4,3}$ | $i_2$ | $i_{2,0}$ | $i_{2,1}$ | $i_{2,2}$ |
| Rank (rank)=1 with $N_g = 2$ *codebookMode=1* | $(\lceil \log_2 N_1 O_1 \rceil,$ $\lceil \log_2 N_2 O_2 \rceil$ $)$ | N/A | 2 | N/A | N/A | 2 | N/A | N/A | N/A |
| Rank=1 with $N_g = 4$ *codebookMode=1* | $(\lceil \log_2 N_1 O_1 \rceil,$ $\lceil \log_2 N_2 O_2 \rceil$ $)$ | N/A | 2 | 2 | 2 | 2 | N/A | N/A | N/A |
| Rank=2 with $N_g = 2$, $N_1 N_2 = 2$ *codebookMode=1* | $(\lceil \log_2 N_1 O_1 \rceil,$ $\lceil \log_2 N_2 O_2 \rceil$ $)$ | 1 | 2 | N/A | N/A | 1 | N/A | N/A | N/A |
| Rank=3 or 4 with $N_g = 2, N_1 N_2 = 2$ *codebookMode=1* | $(\lceil \log_2 N_1 O_1 \rceil,$ $\lceil \log_2 N_2 O_2 \rceil$ $)$ | 0 | 2 | N/A | N/A | 1 | N/A | N/A | N/A |
| **Rank=2** or 3 or 4 with $N_g = 2, N_1 N_2 > 2$ *codebookMode=1* | $\lceil \log_2 N_1 O_1 \rceil,$ $\lceil \log_2 N_2 O_2 \rceil$ $)$ | 2 | 2 | N/A | N/A | 1 | N/A | N/A | N/A |
| Rank=2 with $N_g = 4$, $N_1 N_2 = 2$ *codebookMode=1* | $\lceil \log_2 N_1 O_1 \rceil,$ $\lceil \log_2 N_2 O_2 \rceil$ $)$ | 1 | 2 | 2 | 2 | 1 | N/A | N/A | N/A |
| Rank=3 or 4 with $N_g = 4, N_1 N_2 = 2$ *codebookMode=1* | $\lceil \log_2 N_1 O_1 \rceil,$ $\lceil \log_2 N_2 O_2 \rceil$ $)$ | 0 | 2 | 2 | 2 | 1 | N/A | N/A | N/A |
| **Rank=2** or 3 or 4 with $N_g = 4, N_1 N_2 > 2$ *codebookMode=1* | $\lceil \log_2 N_1 O_1 \rceil,$ $\lceil \log_2 N_2 O_2 \rceil$ $)$ | 2 | 2 | 2 | 2 | 1 | N/A | N/A | N/A |
| Rank=1 with $N_g = 2$ *codebookMode=2* | $(\lceil \log_2 N_1 O_1 \rceil,$ $\lceil \log_2 N_2 O_2 \rceil$ $)$ | N/A | 2 | 2 | N/A | N/A | 2 | 1 | 1 |
| Rank=2 with $N_g = 2$, $N_1 N_2 = 2$ *codebookMode=2* | $\lceil \log_2 N_1 O_1 \rceil,$ $\lceil \log_2 N_2 O_2 \rceil$ $)$ | 1 | 2 | 2 | N/A | N/A | 1 | 1 | 1 |

(continued)

| | Wideband PMI information fields $X_1$ | | | | | Wideband or subband PMI information fields $X_2$ | | | |
|---|---|---|---|---|---|---|---|---|---|
| | $(i_{1,1}, i_{1,2})$ | $i_{1,3}$ | $i_{1,4,1}$ | $i_{1,4,2}$ | $i_{1,4,3}$ | $i_2$ | $i_{2,0}$ | $i_{2,1}$ | $i_{2,2}$ |
| **Rank=3 or** 4 with $N_g = 2$, $N_1N_2 = 2$ *codebookMode=2* | $(\lceil \log_2 N_1 O_1 \rceil, \lceil \log_2 N_2 O_2 \rceil)$ | 0 | 2 | 2 | N/A | N/A | 1 | 1 | 1 |
| Rank=2 or 3 or 4 with $N_g = 2$, $N_1N_2 > 2$ *codebookMode=2* | $(\lceil \log_2 N_1 O_1 \rceil, \lceil \log_2 N_2 O_2 \rceil)$ | 2 | 2 | 2 | N/A | N/A | 1 | 1 | 1 |
| **Note:** $(N_g,N_1,N_2)$ and $(O_1,O_2)$ are as specified in TS38.214 | | | | | | | | | |

Optionally, padding bits can be determined by a difference between the total maximum number of bits and the maximum number of reported bits.

Optionally, the maximum number of reported bits can be obtained by summing maximum bit values for all sub-configurations within the sets of allowed reported rank values.

Optionally, assuming the number M of CSI-RS resources corresponding to the first reference sub-configuration is equal to 3, the number of bits of the CRI of the first reference sub-configuration is $\lceil \log_2(M) \rceil = 2$ bits.

Optionally, assuming codebookType is type1-SinglePanel, and the number of antenna ports for L=3 sub-configurations are {32, 24, 16} respectively, the steps for calculating padding bits are as follows.

Step 1: calculating the maximum bit value for each sub-configuration of the L=3 sub-configurations within a set of allowed reported rank values $r_i$. Optionally, calculating, at each rank value in the set of rank values of sub-configuration i, a sum $B(r_i)$ of the bitwidth occupied by the PMI of sub-configuration i and the bitwidth occupied by the wideband CQI for the first and/or second TB of sub-configuration i. Then, selecting the maximum bit value for sub-configuration i within the set of allowed reported rank values $r_i$ and denoting it as Si.

Step 2: summing Si values obtained in Step 1 for each sub-configuration of the L=3 sub-configurations and denoting it as $N_{max}$.

Step 3: assuming the reported rank value for sub-configuration i is $R_i$, for the L=3 sub-configurations, calculating, at the reported rank value $R_i$, a sum $B(R_i)$ of the bitwidth occupied by the PMI of each sub-configuration i and the bitwidth occupied by the wideband CQI for the first and/or second TB. Then, summing $B(R_i)$ of the L=3 sub-configurations to obtain

$$N_{\text{reported}} = \sum_{i=1}^{N} B(R_i).$$

Step 4: the number of padding bits $O_P$ is $O_P = N_{max} - N_{\text{reported}}$.

Optionally, the processing method in this embodiment is also applicable to a semi-persistent CSI report for wideband granularity CSI reporting on a PUCCH (Physical Uplink Control CHannel, Physical Uplink Control Channel).

Through the above solution in this embodiment, specifically by clarifying the content included in a periodic CSI report and a semi-persistent CSI report (where the reported CSI has wideband granularity) under the Type1 SD adaptation scenario, which includes at least one of the CRI of the first reference sub-configuration (which can serve as a shared CRI for other sub-configurations), CQI, or PMI, and by specifying the mapping rules for the CSI, a method is provided to enable a single channel state information report to contain multiple channel state information for different spatial domain modes, which avoids separately reporting multiple channel state information for different spatial domain modes, and thus improves transmission efficiency and/or saves resources.

Third Embodiment

Based on any of the above embodiments of the present application, this embodiment further discloses the method for generating and determining a channel state information report under the Type1 SD adaptation scenario.

Optionally, it is assumed that under the Type1 SD adaptation scenario, a periodic CSI report contains CSI corresponding to all L sub-configurations. The L sub-configurations share a same CRI, and the shared CRI for the L sub-configurations is calculated according to the CSI-RS resources of the first reference sub-configuration.

Optionally, the first reference sub-configuration is a sub-configuration having the largest number of CSI-RS antenna ports among the L sub-configurations.

Optionally, assuming CSI-RS resources corresponding to the first reference sub-configuration are M, the L sub-configurations share the same CRI, which is a preferred CRI value selected from the M CSI-RS resources corresponding to the first reference sub-configuration. Referring to FIG. 6, optionally, CSI-RS resources which correspond to the same sub-configuration have the same number of antenna ports, density, CDM group, etc.

Optionally, the periodic CSI report includes at least one of a CRI of the first reference sub-configuration (if reported), RIs of the L sub-configurations (if reported), wideband PMIs of the L sub-configurations (if reported), a wideband CQI for the first TB of the first reference sub-configuration (if reported), a wideband CQI for the first TB of the remaining L-1 sub-configurations (if reported), a wideband CQI for the second TB of the first reference sub-configuration (if reported), or a wideband differential CQI for the second TB of the remaining L-1 sub-configurations (if reported).

Optionally, it is assumed that the CSI report type is a periodic CSI report, codebookType is typeI-SinglePanel, pmi-FormatIndicator is set to widebandPMI, and cqi-FormatIndicator is set to widebandCQI. If the first reference sub-configuration is sub-configuration #1, the content contained in a CSI report containing L sub-configurations is as shown in Table 6.

Table 6 Second example table of content in channel state information report

| Channel state information report number | CSI fields |
|---|---|
| CSI report #n | CRI of first reference sub-configuration (if reported) |
| | RI of first reference sub-configuration (if reported) |
| | RI of sub-configuration #2 (if reported) |
| | ... |
| | RI of sub-configuration #L (if reported) |
| | Zero padding bits Op |
| | PMI wideband information fields X1 of first reference sub-configuration (if reported) |
| | PMI wideband information fields X2 of first reference sub-configuration (if reported) |
| | PMI wideband information fields X1 of sub-configuration #2 (if reported) |
| | PMI wideband information fields X2 of sub-configuration #2 (if reported) |
| | ... |
| | PMI wideband information fields X1 of sub-configuration #L (if reported) |
| | PMI wideband information fields X2 of sub-configuration #L (if reported) |
| | Wideband CQI for first TB of first reference sub-configuration (if reported) |
| | Wideband differential CQI for first TB of sub-configuration #2 (if reported) |
| | ... |
| | Wideband differential CQI for first TB of sub-configuration #L (if reported) |
| | Wideband CQI for second TB of first reference sub-configuration (if reported) |
| | Wideband differential CQI for second TB of sub-configuration #2 (if reported) |
| | ... |
| | Wideband differential CQI for second TB of sub-configuration #L (if reported) |

Optionally, the bitwidths occupied by the CRI of the first reference sub-configuration, the RI of the sub-configuration i, the wideband CQI for the first TB of the first reference sub-configuration, and the wideband differential CQI for the first and/or second TB of each sub-configuration i of the remaining L-1 sub-configurations can be found in Table 7 and Table 8.

Table 7 Third example table of content of first reference sub-configuration

| Domain | Bitwidth | | | | |
| --- | --- | --- | --- | --- | --- |
| | One antenna port | Two antenna ports | Four antenna ports | More than four antenna ports | |
| | | | | Rank is 1~4 | Rank 5~8 |
| CRI of first reference sub-configuration | $\lceil \log_2(M) \rceil$ | $\lceil \log_2(M) \rceil$ | $\lceil \log_2(M) \rceil$ | $\lceil \log_2(M) \rceil$ | $\lceil \log_2(M) \rceil$ |
| RI of sub-configuration i when *codebookType* is set to *typel-SinglePanel* | 0 | $\min(1, \lceil \log_2 n_{RI} \rceil)$ | $\min(2, \lceil \log_2 n_{RI} \rceil)$ | $\lceil \log_2 n_{RI} \rceil$ | $\lceil \log_2 n_{RI} \rceil$ |
| RI of sub-configuration i when *reportQuantity* is set to 'cri-RI-CQI' | 0 | 1 | 2 | 3 | 3 |
| Wideband CQI for first TB of first reference sub-configuration | 4 | 4 | 4 | 4 | 4 |
| Wideband CQI for first TB of each sub-configuration i in remaining L-1 sub-configurations | 2 | 2 | 2 | 2 | 2 |
| Wideband CQI for second TB of first reference sub-configuration | 0 | 0 | 0 | 0 | 4 |
| Wideband CQI for second TB of each sub-configuration i in remaining L-1 sub-configurations | 0 | 0 | 0 | 0 | 2 |

Table 8 Fourth example table of content of first reference sub-configuration

| Domain | Bitwidth |
| --- | --- |
| RI of sub-configuration i when *codebookType* is set to *typel-MultiPanel* | $\min(2, \lceil \log_2 n_{RI} \rceil)$ |

Optionally, the 2-bit wideband differential CQI in Table 7 is interpreted as follows:

Offset value level of sub-configuration i = the wideband CQI index (of the first TB and/or the second TB) of sub-configuration i - the wideband CQI index (of the first TB and/or the second TB) of the first reference sub-configuration.

Optionally, the mapping relationship between the offset value level of sub-configuration i and the wideband differential CQI value of sub-configuration i is as shown in Table 9.

Table 9 Example table of mapping of differential CQI value of sub-configuration to offset value level of sub-configuration

| Differential CQI value of sub-configuration | Offset value level |
| --- | --- |
| 0 | 0 |
| 1 | 1 |
| 2 | $\geq 2$ |
| 3 | $\leq -1$ |

Optionally, assuming a wideband CQI index for the first TB of the first reference sub-configuration is 7, and a wideband CQI index for the first TB of sub-configuration i is 5, an offset value level of sub-configuration i is 5-7=-2. Therefore, a wideband differential CQI value for the first TB of sub-configuration i in the CSI report is 3, that is, the bit value of the wideband differential CQI for the first TB of sub-configuration i is 11.

Optionally, the padding bits can be determined by a difference between the total maximum number of bits and the maximum number of reported bits.

Optionally, the maximum number of reported bits can be obtained by summing maximum bit values for all sub-configurations within the sets of allowed reported rank values.

Optionally, assuming the number M of CSI-RS resources corresponding to the first reference sub-configuration is equal to 3, the number of bits of the CRI of the first reference sub-configuration is $\lceil \log_2(M) \rceil = 2 \text{ bits}$.

Optionally, assuming codebookType is type1-SinglePanel, and the number of antenna ports for L=3 sub-configurations are {32, 24, 16} respectively, the steps for calculating padding bits are as follows.

Step 1: calculating the maximum bit value for the first reference sub-configuration in the L=3 sub-configurations within a set of allowed reported rank values $r_i$. Optionally, for the first reference sub-configuration, calculating, at each rank value in the set of rank values, a sum $B(r_i)$ of the bitwidth occupied by the PMI and the bitwidth occupied by the wideband CQI for the first and/or second TB. Then, selecting the maximum bit value for sub-configuration i within the set of allowed reported rank values $r_i$ and denoting it as Si.

Step 2: calculating the maximum bit value for each sub-configuration i of the remaining L-1=2 sub-configurations other than the first reference sub-configuration within a set of allowed reported rank values $r_i$. Optionally, calculating, at each rank value in the set of rank values of sub-configuration i, a sum $B(r_i)$ of the bitwidth occupied by the PMI of sub-configuration i and the bitwidth occupied by the wideband differential CQI for the first and/or second TB of sub-configuration i. Then, selecting the maximum bit value for sub-configuration i within the set of allowed reported rank values $r_i$ and denoting it as Si.

Step 3: summing the maximum bit values, Si values, for the L=3 sub-configurations within the sets of allowed reported rank values $r_i$ obtained in Step 1 and Step 2, and denoting it as $N_{max}$.

Step 4: assuming the reported rank value for the first reference sub-configuration i is $R_i$, calculating, for the first reference sub-configuration at the reported rank value $R_i$, a sum $B(R_i)$ of the bitwidth occupied by the PMI and the bitwidth occupied by the wideband CQI for the first and/or second TB. Similarly, for each sub-configuration i of the remaining L-1 sub-configurations other than the first reference sub-configuration, calculating, at the reported rank value $R_i$, a sum $B(R_i)$ of the bitwidth occupied by the PMI and the bitwidth occupied by the wideband differential CQI for the first and/or second TB.

Then, summing $B(R_i)$ of the L=3 sub-configurations to obtain $N_{\text{reported}} = \sum_{i=1}^{N} B(R_i)$.

Step 5: the number of padding bits $O_P$ is $O_P = N_{max} - N_{\text{reported}}$.

Optionally, the processing method in this embodiment is also applicable to a semi-persistent CSI report for wideband granularity CSI reporting on a PUCCH.

Compared to the solution in the second embodiment, in the method of this embodiment, except for using 4 bits for the wideband CQI for the first reference sub-configuration, the remaining sub-configurations adopt a differential method, reducing the wideband CQI bits to 2 bits. This can further reduce payload of multiple sub-configuration CSI within a single CSI report, while ensuring a reasonable CSI reporting content, thereby helping the base station better achieve network energy saving.

Through the above solution in this embodiment, specifically by clarifying the content included in a periodic CSI report under the Type1 SD adaptation scenario, which includes at least one of the CRI of the first reference sub-configuration (which can serve as a shared CRI for other sub-configurations), the wideband CQI for the first reference sub-configuration, the wideband differential CQIs for the remaining L-1 sub-configurations other than the first reference sub-configuration, or PMI, and by specifying the mapping rules for the CSI, the payload of multiple sub-configuration CSI within a single CSI report is reduced by using the differential method, thereby ensuring a reasonable CSI reporting content and helping the base station to achieve energy saving.

Fourth Embodiment

Based on any of the above embodiments of the present application, this embodiment further discloses the method for generating and determining a channel state information report under the Type1 SD adaptation scenario.

Optionally, it is assumed that under the Type1 SD adaptation scenario, the number of sub-configurations is L, an aperiodic CSI report contains CSI corresponding to N<=L sub-configurations, and the L sub-configurations share a same CRI. Optionally, the shared CRI for the L sub-configurations is calculated according to the CSI-RS resources of the first reference sub-configuration.

Optionally, the first reference sub-configuration is a sub-configuration having the largest number of CSI-RS antenna ports among the L sub-configurations.

Optionally, assuming CSI-RS resources corresponding to the first reference sub-configuration are M, the L sub-configurations share the same CRI, which is a preferred CRI value selected from the M CSI-RS resources corresponding to the first reference sub-configuration. Referring to FIG. 6, optionally, CSI-RS resources which correspond to the same sub-configuration have the same number of antenna ports, density, CDM group, etc.

Optionally, assuming the CSI report type is an aperiodic CSI report, if sub-configuration indices reported at the current occasion include an index of the first reference sub-configuration, and a CRI needs to be reported, then the CRI value obtained according to the CSI-RS resources of the first reference sub-configuration is reported; or, if the current occasion is a reporting occasion for a first group of N sub-configurations in the L sub-configurations, and the CRI needs to be reported, then the CRI value obtained according to the CSI-RS resources of the first reference sub-configuration is reported.

Optionally, assuming the CSI report type is an aperiodic CSI report, if the sub-configuration indices reported at the current occasion do not include the index of the first reference sub-configuration, the CRI value is not reported regardless of whether the CRI needs to be reported; or, if the current occasion is a reporting occasion for a non-first group of N sub-configurations in the L sub-configurations, the CRI value is not reported regardless of whether the CRI needs to be reported.

Optionally, aperiodic CSI reports for L sub-configurations are performed over multiple occasions, and the aperiodic CSI report at each occasion contains CSI for N<=L sub-configurations.

Optionally, the aperiodic CSI report includes two parts: CSI part 1 and CSI part 2.

Optionally, Part 1 of the aperiodic CSI report contains at least one of: a Sub-configuration index (sub-configuration index), a CRI of the first reference configuration (if reported), RIs of the N sub-configurations (if reported), or wideband CQIs for the first TBs of the N sub-configurations (if reported).

Optionally, the sub-configuration index can be a combination of sub-configuration indices, such as {starting sub-configuration index, ending sub-configuration index}. Optionally, when the indices of the N sub-configurations in an aperiodic CSI report are consecutive, the sub-configuration indices can be reported in a format of {starting sub-configuration index, ending sub-configuration index}.

Optionally, it is assumed that the CSI report type is an aperiodic CSI report, codebookType is typel-SinglePanel, pmi-Formatindicator is set to widebandPMI, cqi-Formatindicator is set to widebandCQI, and the sub-configuration indices are reported via an index combination {starting sub-configuration index, ending sub-configuration index}. If the first reference sub-configuration is sub-configuration #1, the content contained in Part 1 of a CSI report containing N sub-configurations is as shown in Table 10.

Table 10 Example table of content in Part 1 of CSI Report containing L sub-configurations

| Channel state information report number | CSI fields |
|---|---|
| CSI report #n<br>CSI part 1 | Starting sub-configuration index in N sub-configurations |
| | Ending sub-configuration index in N sub-configurations |
| | CRI of first reference sub-configuration (if reported) |
| | RI of first reference sub-configuration (if reported) |
| | RI of sub-configuration #2 (if reported) |
| | ... |
| | RI of sub-configuration #N (if reported) |
| | Wideband CQI for first TB of first reference sub-configuration (if reported) |
| | Wideband CQI for first TB of sub-configuration #2 (if reported) |
| | ... |
| | Wideband CQI for first TB of sub-configuration #N (if reported) |

Optionally, the starting sub-configuration index and the ending sub-configuration index for the N sub-configurations can be encoded separately or jointly.

Optionally, the bitwidths occupied by the CRI of the first reference sub-configuration, the RI of sub-configuration i, and the wideband CQI for the first and/or second TB of sub-configuration i can be found in Table 2 and Table 3.

Optionally, the bitwidths occupied by the starting sub-configuration index and the ending sub-configuration index among the N sub-configurations can be found in Table 11 and Table 12.

Table 11 First example table of bitwidths of starting and ending sub-configuration indices for N sub-configurations

| Domain | Bitwidth |
|---|---|
| Starting sub-configuration index in N sub-configurations | $\lceil \log_2 L \rceil$ |
| Ending sub-configuration index in N sub-configurations | $\lceil \log_2 L \rceil$ |

Table 12 Second example table of bitwidths of starting and ending sub-configuration indices for N sub-configurations

| Domain | Bitwidth |
|---|---|
| Starting sub-configuration index and ending sub-configuration index for the N sub-configurations are encoded jointly | $( \lceil \log_2 L \rceil, \ \lceil \log_2 L \rceil )$ |

Optionally, assuming the CSI report type is an aperiodic CSI report, codebookType is type1-SinglePanel, pmi-Formatindicator is set to widebandPMI, cqi-FormatIndicator is set to widebandCQI, and the indices of the N sub-configurations are reported one by one. If the first reference sub-configuration is sub-configuration #1, the content contained in Part 1 of a CSI report containing N sub-configurations is as shown in Table 13.

Table 13 First example table of content in Part 1 of CSI Report containing N sub-configurations

| Channel state information report number | CSI fields |
|---|---|
| CSI report #n<br>CSI part 1 | Index of first reference sub-configuration |
| | Index of sub-configuration #2 |
| | ... |
| | Index of sub-configuration #N |
| | CRI of first reference sub-configuration (if reported) |
| | RI of first reference sub-configuration (if reported) |
| | RI of sub-configuration #2 (if reported) |
| | ... |
| | RI of sub-configuration #N (if reported) |
| | Wideband CQI for first TB of first reference sub-configuration (if reported) |
| | Wideband CQI for first TB of sub-configuration #2 (if reported) |
| | ... |
| | Wideband CQI for first TB of sub-configuration #N (if reported) |

Optionally, the bitwidth occupied by the index of each sub-configuration i among the N sub-configurations can be found in Table 12-1.

Table 12-1 Second example table of bitwidth occupied by index of each sub-configuration i in N Sub-configurations

| Domain | Bitwidth |
|---|---|
| Index of sub-configuration i | $\lceil \log_2 L \rceil$ |

Optionally, Part 2 of the aperiodic CSI report contains at least one of: wideband CQIs for the second TBs of the N sub-configurations (if reported), or wideband PMIs of the N sub-configurations (if reported).

Optionally, the content contained in Part 2 of the aforementioned CSI report containing L sub-configurations is as shown in Table 14.

Table 14 Example table of content in Part 2 of CSI Report containing L sub-configurations

| Channel state information report number | CSI fields |
|---|---|
| CSI report #n CSI part 2 | Wideband CQI for second TB of first reference sub-configuration (if reported) |
| | Wideband CQI for second TB of sub-configuration #2 (if reported) |
| | ... |
| | Wideband CQI for second TB of sub-configuration #N (if reported) |
| | PMI wideband information fields X1 of first reference sub-configuration (if reported) |
| | PMI wideband information fields X2 of first reference sub-configuration (if reported) |
| | PMI wideband information fields X1 of sub-configuration #2 (if reported) |
| | PMI wideband information fields X2 of sub-configuration #2 (if reported) |
| | ... |
| | PMI wideband information fields X1 of sub-configuration #N (if reported) |
| | PMI wideband information fields X2 of sub-configuration #N (if reported) |

Optionally, the bitwidth occupied by the PMI of sub-configuration i can be found in Table 4 or Table 5.

Optionally, the processing method in this embodiment is also applicable to a semi-persistent CSI report for CSI reporting on a PUSCH (Physical Uplink Shared Channel, Physical Uplink Shared Channel).

Through the above solution in this embodiment, specifically by clarifying the content included in an aperiodic CSI report and a semi-persistent CSI report transmitted on the PUSCH under the Type1 SD adaptation scenario, which includes at least one of the CRI of the first reference sub-configuration (which can serve as a shared CRI for other sub-configurations), CQI, or PMI, and by specifying the mapping rules for the CSI, a method is provided to enable a single channel state information report to contain multiple channel state information for different spatial domain modes, which avoids separately reporting multiple channel state information for different spatial domain modes, and thus improves transmission efficiency and/or saves resources.

Fifth Embodiment

Based on any of the above embodiments of the present application, this embodiment further discloses the method for generating and determining a channel state information report under the Type1 SD adaptation scenario.

Optionally, it is assumed that under the Type1 SD adaptation scenario, the number of sub-configurations is L, an aperiodic CSI report contains CSI corresponding to N<=L sub-configurations, the L sub-configurations share a same CRI, and the shared CRI for the L sub-configurations is calculated according to the CSI-RS resources of the first reference sub-configuration.

Optionally, the first reference sub-configuration is a sub-configuration having the largest number of CSI-RS antenna ports among the L sub-configurations.

Optionally, assuming CSI-RS resources corresponding to a first reference sub-configuration are M, the L sub-configurations share the same CRI, which is a preferred CRI value selected from the M CSI-RS resources corresponding to the first reference sub-configuration. Referring to FIG. 6, optionally, CSI-RS resources which correspond to the same sub-configuration have the same number of antenna ports, density, CDM group, etc.

Optionally, assuming the CSI report type is an aperiodic CSI report, if sub-configuration indices reported at the current occasion include an index of the first reference sub-configuration, and a CRI needs to be reported, then the CRI value obtained according to the CSI-RS resources of the first reference sub-configuration is reported; or, if the current occasion is a reporting occasion for a first group of N sub-configurations in the L sub-configurations, and the CRI needs to be reported, then the CRI value obtained according to the CSI-RS resources of the first reference sub-configuration is reported.

Optionally, assuming the CSI report type is an aperiodic CSI report, if the sub-configuration indices reported at the current occasion do not include the index of the first reference sub-configuration, the CRI value is not reported regardless of whether the CRI needs to be reported; or, if the current occasion is a reporting occasion for a non-first group of N sub-configurations in the L sub-configurations, the CRI value is not reported regardless of whether the CRI needs to be reported.

Optionally, aperiodic CSI reports for the L sub-configurations are performed over at least one reporting occasion, and the aperiodic CSI report at each occasion contains CSI for N<=L sub-configurations.

Optionally, the aperiodic CSI report includes two parts: CSI part 1 and CSI part 2.

Optionally, Part 1 of the aperiodic CSI report contains at least one of: a Sub-configuration index (sub-configuration index), a CRI of the first reference configuration (if reported), Rls of the N sub-configurations (if reported), a wideband CQI for the first TB of the first reference sub-configuration (if reported), or wideband differential CQIs for the first TBs of the remaining N-1 sub-configurations (if reported).

Optionally, the sub-configuration index can be a combination of sub-configuration indices, such as {starting sub-configuration index, ending sub-configuration index}. Optionally, when the indices of the N sub-configurations in an aperiodic CSI report are consecutive, the sub-configuration indices can be reported in a format of {starting sub-configuration index, ending sub-configuration index}.

Optionally, it is assumed that the CSI report type is an aperiodic CSI report, codebookType (codebook type) is type1-SinglePanel, pmi-Formatindicator is set to widebandPMI, cqi-Formatindicator is set to widebandCQI, and the sub-configuration indices are reported via an index combination {starting sub-configuration index, ending sub-configuration index}. If the first reference sub-configuration is sub-configuration #1, and the indices of N sub-configurations reported are sub-configuration #1 to sub-configuration #N, the content contained in Part 1 of a CSI report containing N sub-configurations is as shown in Table 15.

Table 15 First example table of content in Part 1 of CSI Report containing N sub-configurations

| Channel state information report number | CSI fields |
|---|---|
| CSI report #n CSI part 1 | Starting sub-configuration index in N sub-configurations |
| | Ending sub-configuration index in N sub-configurations |
| | CRI of first reference sub-configuration (if reported) |
| | RI of first reference sub-configuration (if reported) |
| | RI of sub-configuration #2 (if reported) |
| | ... |
| | RI of sub-configuration #N |
| | Wideband CQI for first TB of first reference sub-configuration |
| | Wideband differential CQI for first TB of sub-configuration #2 |
| | ... |
| | Wideband differential CQI for first TB of sub-configuration #N |

Optionally, the starting sub-configuration index and the ending sub-configuration index for the N sub-configurations can be encoded separately or jointly.

Optionally, the bitwidths occupied by the CRI of the first reference sub-configuration, the RI of the sub-configuration i, the wideband CQI for the first TB of the first reference sub-configuration, and the wideband differential CQI for the first and/or second TB of each sub-configuration i of the remaining L-1 sub-configurations can be found in Table 7 and Table 8.

Optionally, the 2-bit wideband differential CQI in Table 15 is interpreted as follows:

Offset value level of sub-configuration i = the wideband CQI index (of the first TB and/or the second TB) of sub-configuration i - the wideband CQI index (of the first TB and/or the second TB) of the first reference sub-configuration.

Optionally, the mapping relationship between the offset value level of sub-configuration i and the wideband differential CQI value of sub-configuration i can be found in Table 9.

Optionally, the bitwidths of the starting sub-configuration index and the ending sub-configuration index among the N sub-configurations in Table 15 can be found in Table 11 and Table 12.

Optionally, it is assumed that the CSI report type is an aperiodic CSI report, codebookType is typel-SinglePanel, pmi-Formatindicator is set to widebandPMI, cqi-Formatindicator is set to widebandCQI, and the indices of the N sub-configurations are reported one by one. If the first reference sub-configuration is sub-configuration #1, the content contained in Part 1 of the CSI report containing N sub-configurations is as shown in Table 16.

Table 16 Second example table of content in Part 1 of CSI Report containing N sub-configurations

| Channel state information report number | CSI fields |
|---|---|
| CSI report #n<br><br>CSI part 1 | Sub-configuration index of first reference sub-configuration |
| | Sub-configuration index of sub-configuration #2 |
| | ... |
| | Sub-configuration index of sub-configuration #N |
| | CRI of first reference sub-configuration (if reported) |
| | RI of first reference sub-configuration (if reported) |
| | RI of sub-configuration #2 (if reported) |
| | ... |
| | RI of sub-configuration #N (if reported) |
| | Wideband CQI for first TB of first reference sub-configuration (if reported) |
| | Wideband differential CQI for first TB of sub-configuration #2 (if reported) |
| | ... |
| | Wideband differential CQI for first TB of sub-configuration #N (if reported) |

Optionally, Part 2 of the aperiodic CSI report contains at least one of: a wideband CQI for the second TB of the first reference sub-configuration (if reported), wideband differential CQIs for the second TBs of the remaining N-1 sub-configurations, or wideband PMIs of the N sub-configurations (if reported).

Optionally, the content contained in Part 2 of the aforementioned CSI report containing N sub-configurations is as shown in Table 17.

Table 17 Example table of content in Part 2 of CSI Report containing N sub-configurations

| Channel state information report number | CSI fields |
|---|---|
| CSI report #n<br><br>CSI part 2 | Wideband CQI for second TB of first reference sub-configuration (if reported) |
| | Wideband differential CQI for second TB of sub-configuration #2 (if reported) |
| | ... |
| | Wideband differential CQI for second TB of sub-configuration #N (if reported) |
| | PMI wideband information fields X1 of first reference sub-configuration (if reported) |
| | PMI wideband information fields X2 of first reference sub-configuration (if reported) |
| | PMI wideband information fields X1 of sub-configuration #2 (if reported) |
| | PMI wideband information fields X2 of sub-configuration #2 (if reported) |
| | ... |
| | PMI wideband information fields X1 of sub-configuration #N (if reported) |
| | PMI wideband information fields X2 of sub-configuration #N (if reported) |

Optionally, the bitwidth occupied by the PMI of sub-configuration i can be found in Table 4 or Table 5

Optionally, the processing method in this embodiment is also applicable to a semi-persistent CSI report for CSI reporting on a PUSCH.

Through the above solution in this embodiment, specifically by clarifying the content included in an aperiodic CSI report and a semi-persistent CSI report transmitted on the PUSCH under the Type1 SD adaptation scenario, which includes at least one of the CRI of the first reference sub-configuration (which can serve as a shared CRI for other sub-configurations), the wideband CQI for the first reference sub-configuration, the wideband differential CQIs for the remaining L-1 sub-configurations other than the first reference sub-configuration, or PMI, and by specifying the mapping rules for the CSI, the payload of multiple sub-configuration CSI within a single CSI report is reduced by using the differential method, thereby ensuring a reasonable CSI reporting content and helping the base station to achieve energy saving.

Sixth Embodiment

Based on any of the above embodiments of the present application, this embodiment further discloses a method for generating and determining a channel state information report under a Type2 SD adaptation scenario.

Optionally, the Type2 SD adaptation scenario is a scenario where part of the antenna elements associated with an antenna port are enabled or disabled.

Optionally, each sub-configuration in the Type2 SD adaptation scenario is separately corresponding to a same channel state information-reference signal resource.

Optionally, each channel state information-reference signal resource has a channel state information-reference signal resource index.

Optionally, it is assumed that under the Type2 SD adaptation scenario, a periodic CSI report contains CSI corresponding to all L sub-configurations. Each of the L sub-configurations has its own CRI, and the CRI for each sub-configuration i is calculated according to the CSI-RS resources corresponding to that sub-configuration i.

Optionally, assuming the number of CSI-RS resources corresponding to sub-configuration i is M, a CRI value is selected from M CSI-RS resources. Referring to FIG. 7, FIG. 7 is a schematic diagram of a sub-configuration according to a sixth embodiment.

Optionally, CSI-RS resources which correspond to the same sub-configuration have the same number of antenna ports, density, CDM group, etc.

Optionally, it is assumed that under the Type2 SD adaptation scenario, the L sub-configurations share a same RI, and the shared RI for the L sub-configurations is calculated according to the CSI-RS resources corresponding to the CRI index of the second reference sub-configuration.

Optionally, the second reference sub-configuration may be a sub-configuration with the smallest or largest sub-configuration index among L sub-configurations.

Optionally, the periodic CSI report includes at least one of CRIs of L configurations (if reported), an RI of the second sub-configuration (if reported), wideband PMIs of the L sub-configurations (if reported), wideband CQIs for the first TBs of the L sub-configurations (if reported), or wideband CQIs for the second TBs of the L sub-configurations (if reported).

Optionally, if reported refers to performing the reporting on demand according to the requirement of the report quality (report quality) configured by the base station.

Optionally, it is assumed that a type of CSI report is a periodic CSI report, codebookType (codebook type) is type1-SinglePanel, pmi-Formatindicator is set to widebandPMI, and cqi-Formatindicator is set to widebandCQI. If the second reference sub-configuration is sub-configuration #1, the content contained in a CSI report containing L sub-configurations is as shown in Table 18.

Table 18 First example table of content containing in CSI Report containing L sub-configurations

| Channel state information report number | CSI fields |
|---|---|
| | CRI of second reference sub-configuration (if reported) |
| | CRI of sub-configuration #2 (if reported) |
| | ... |
| | CRI of sub-configuration #L (if reported) |
| | RI of second reference sub-configuration (if reported) |
| | Zero padding bits Op |
| | PMI wideband information fields X1 of second reference sub-configuration (if reported) |
| | PMI wideband information fields X2 of second reference sub-configuration (if reported) |

(continued)

| Channel state information report number | CSI fields |
|---|---|
| CSI report #n | PMI wideband information fields X1 of sub-configuration #2 (if reported) |
| | PMI wideband information fields X2 of sub-configuration #2 (if reported) |
| | ... |
| | PMI wideband information fields X1 of sub-configuration #L (if reported) |
| | PMI wideband information fields X2 of sub-configuration #L (if reported) |
| | Wideband CQI for first TB of second reference sub-configuration (if reported) |
| | Wideband CQI for first TB of sub-configuration #2 (if reported) |
| | ... Wideband CQI for first TB of sub-configuration #L (if reported) |
| | Wideband CQI for second TB of second reference sub-configuration (if reported) |
| | Wideband CQI for second TB of sub-configuration #2 (if reported) |
| | ... |
| | Wideband CQI for second TB of sub-configuration #L (if reported) |

Optionally, the bitwidths occupied by the CRI of sub-configuration i, the RI of the second reference sub-configuration, and the wideband CQI for the first TB and/or second TB of sub-configuration i can be found in Table 19 and Table 20.

Table 19 First example table of bitwidths of CRI of sub-configuration i, RI of second reference sub-configuration, and wideband CQI for sub-configuration i

| Domain | Bitwidth | | | | |
|---|---|---|---|---|---|
| | One antenna port | Two antenna ports | Four antenna ports | More than four antenna ports | |
| | | | | Rank is 1~4 | Rank is 5~8 |
| CRI of sub-configuration i | $\lceil \log_2(M_i) \rceil$ | $\lceil \log_2(M_i) \rceil$ | $\lceil \log_2(M_i) \rceil$ | $\lceil \log_2(M_i) \rceil$ | $\lceil \log_2(M_i) \rceil$ |
| RI of second reference sub-configuration when *codebookType* is set to *typel-SinglePanel* | 0 | $\min(1, \lceil \log_2 n_{RI} \rceil)$ | $\min(2, \lceil \log_2 n_{RI} \rceil)$ | $\lceil \log_2 n_{RI} \rceil$ | $\lceil \log_2 n_{RI} \rceil$ |
| RI of second reference sub-configuration when *report-Quantity* is set to 'cri-RI-CQI' | 0 | 1 | 2 | 3 | 3 |
| Wideband CQI for first TB of sub-configuration i | 4 | 4 | 4 | 4 | 4 |
| Wideband CQI for second TB of sub-configuration i | 0 | 0 | 0 | 0 | 4 |

Table 20 Second example table of bitwidths of CRI of sub-configuration i, RI of second reference sub-configuration i, and wideband COI for sub-configuration i

| Domain | Bitwidth |
|---|---|
| RI of second reference configuration when *codebookType* is set to *typel-MultiPanel* | $\min(2, \lceil \log_2 n_{RI} \rceil)$ |

Optionally, Mi is the number of CSI-RS resources corresponding to sub-configuration i, and $n_{RI}$ is the number of allowed rank indicator values.

Optionally, the bitwidth occupied by the PMI of sub-configuration i can be found in Table 4 or Table 5.

Optionally, padding bits can be determined by a difference between the total maximum number of bits and the maximum number of reported bits.

Optionally, the total maximum number of bits can be obtained by summing maximum bit values for all sub-configurations within the sets of allowed reported rank values.

Optionally, the maximum number of reported bits can be obtained by summing the bitwidth occupied by the PMI under the reported rank value for each sub-configuration, the wideband (differential) CQI of the first and/or second TB under the reported rank value for each sub-configuration, and the CRI for each sub-configuration.

Optionally, assuming codebookType is typel-SinglePanel, the steps for calculating padding bits are as follows.

Step 1: calculating the maximum bit value for each sub-configuration in L=3 sub-configurations within a set of allowed reported rank values $r_i$. Optionally, for each sub-configuration i, calculating, at each rank value in the set of rank values, a sum $B_i(r)$ of the bitwidth occupied by the PMI, the bitwidth occupied by the wideband CQI for the first and/or second TB, and the bitwidth occupied by the CRI. Then, selecting the maximum bit value for sub-configuration i within the set of allowed reported rank values $r$ and denoting it as Si.

Step 2: summing Si values obtained in Step 1 for each sub-configuration of the L=3 sub-configurations and denoting it as $N_{max}$.

Step 3: assuming the shared rank value determined according to the second reference sub-configuration for the L sub-configurations is R, for each of the L=3 sub-configurations, calculating, at rank value R, a sum $B_i(R)$ of the bitwidth occupied by the PMI, the bitwidth occupied by the wideband CQI for the first and/or second TB, and the bitwidth occupied by the CRI for sub-configuration i, and summing $B_i(R)$ of the L=3 sub-configurations to obtain $N_{\text{reported}} = \sum_{i=1}^{N} B_i(R)$.

Step 4: the number of padding bits $O_P$ is $O_P = N_{max} - N_{\text{reported}}$.

Optionally, the processing method in this embodiment is also applicable to a semi-persistent CSI report for wideband granularity CSI reporting on a PUCCH.

Through the above solution in this embodiment, specifically by clarifying the content included in a periodic CSI report under the Type2 SD adaptation scenario, which includes at least one of the CRI, the RI of the second reference sub-configuration (which can serve as a shared RI for other sub-configurations), CQI, or PMI, and by specifying the mapping rules for the CSI, a method is provided to enable a single channel state information report to contain multiple channel state information for different spatial domain modes, which avoids separately reporting multiple channel state information for different spatial domain modes, and thus improves transmission efficiency and/or saves resources.

Seventh Embodiment

Based on any of the above embodiments of the present application, this embodiment further discloses the method for generating and determining a channel state information report under the Type2 SD adaptation scenario.

Optionally, it is assumed that under the Type2 SD adaptation scenario, a periodic CSI report contains CSI corresponding to all L sub-configurations. Each of the L sub-configurations has its own CRI, and the CRI for each sub-configuration i is calculated according to the CSI-RS resources corresponding to that sub-configuration i.

Optionally, assuming the number of CSI-RS resources corresponding to sub-configuration i is M, a CRI value is selected from M CSI-RS resources. Referring to FIG. 7, optionally, CSI-RS resources which correspond to the same sub-configuration have the same number of antenna ports, density, CDM group, etc.

Optionally, it is assumed that under the Type2 SD adaptation scenario, the L sub-configurations share a same RI, and the shared RI for the L sub-configurations is calculated based on the CSI-RS resources corresponding to the CRI index of the second reference sub-configuration.

Optionally, the second reference sub-configuration may be a sub-configuration with the smallest or largest sub-configuration index among L sub-configurations.

Optionally, the periodic CSI report includes at least one of CRIs of L configurations (if reported), an RI of the second sub-configuration (if reported), wideband PMIs of the L sub-configurations (if reported), wideband CQIs for the first TBs of the L sub-configurations (if reported), or wideband differential CQIs for the second TBs of the L sub-configurations (if reported).

Optionally, it is assumed that a type of CSI report is a periodic CSI report, codebookType (codebook type) is typel-SinglePanel, pmi-Formatindicator is set to widebandPMI, and cqi-Formatindicator is set to widebandCQI. If the second reference sub-configuration is sub-configuration #1, the content contained in a CSI report containing L sub-configurations is as shown in Table 21.

Table 21 Second example table of content containing in CSI Report containing L sub-configurations

| Channel state information report number | CSI fields |
|---|---|
| CSI report #n | CRI of second reference sub-configuration (if reported) |
| | CRI of sub-configuration #2 (if reported) |
| | ... |
| | CRI of sub-configuration #L (if reported) |
| | RI of second reference sub-configuration (if reported) |
| | Zero padding bits Op |
| | PMI wideband information fields X1 of second reference sub-configuration (if reported) |
| | PMI wideband information fields X2 of second reference sub-configuration (if reported) |
| | PMI wideband information fields X1 of sub-configuration #2 (if reported) |
| | PMI wideband information fields X2 of sub-configuration #2 (if reported) |
| | ... |
| | PMI wideband information fields X1of sub-configuration #L (if reported) |
| | PMI wideband information fields X2of sub-configuration #L (if reported) |
| | Wideband CQI for first TB of second reference sub-configuration (if reported) |
| | Wideband differential CQI for first TB of sub-configuration #2 (if reported) |
| | ... |
| | Wideband differential CQI for first TB of sub-configuration #L (if reported) |
| | Wideband CQI for second TB of second reference sub-configuration (if reported) |
| | Wideband differential CQI for second TB of sub-configuration #2 (if reported) |
| | ... |
| | Wideband differential CQI for second TB of sub-configuration #L (if reported) |

Optionally, the 2-bit wideband differential CQI in Table 21 is interpreted as follows:

Offset value level of sub-configuration i = the wideband CQI index (of the first and/or second TB) of sub-configuration i - the wideband CQI index (of the first and/or second TB) of the first reference sub-configuration.

Optionally, the mapping relationship between the offset value level of sub-configuration i and the wideband differential CQI for sub-configuration i can be found in Table 9.

Optionally, padding bits can be determined by a difference between the total maximum number of bits and the maximum number of reported bits.

Optionally, the total maximum number of bits can be obtained by summing maximum bit values for all sub-configurations within the sets of allowed reported rank values.

Optionally, the maximum number of reported bits can be obtained by summing the bitwidth occupied by the PMI under the reported rank value for each sub-configuration, the wideband (differential) CQI of the first and/or second TB under the reported rank value for each sub-configuration, and the CRI for each sub-configuration.

Optionally, assuming the number of CSI-RS resources corresponding to the sub-configuration i is Mi, the number of bits of the CRI of the sub-configuration i is $\lceil \log_2(M_i) \rceil$ . Assuming codebookType is typel-SinglePanel, the steps for calculating padding bits are as follows.

Step 1: calculating the maximum bit value for the second sub-configuration in L=3 sub-configurations within a set of allowed reported rank values r. Optionally, calculating, at each rank value in the set of rank values r of the second sub-configuration, a sum $B_i(r)$ of the bitwidth occupied by the PMI, the bitwidth occupied by the wideband CQI for the first and/or second TB, and bitwidth occupied by the CRI. Then, selecting the maximum bit value for the second sub-configuration within the set of allowed reported rank values *r* and denoting it as Si.

Step 2: calculating the maximum bit value for each sub-configuration i of the remaining L-1=2 sub-configurations other than the second reference sub-configuration within a set of allowed reported rank values r. Optionally, calculating, at each rank value in the set of rank values of sub-configuration i, a sum $B_i(R)$ of the bitwidth occupied by the PMI of sub-configuration i, the bitwidth occupied by the wideband differential CQI for the first and/or second TB of sub-configuration i, and the bitwidth occupied by CRI of sub-configuration i. Then, selecting the maximum bit value for sub-configuration i within the set of allowed reported rank values $r$ and denoting it as Si.

Step 3: summing maximum bit values for the L=3 sub-configurations within the sets of allowed reported rank values $r_i$ obtained in Step 1 and Step 2, and denoting it as $N_{max}$.

Step 4: assuming the shared rank value determined by the second reference sub-configuration for the L sub-configurations is R, calculating, for the first reference sub-configuration at rank value R, a sum $B_i(R)$ of the bitwidth occupied by the PMI, the bitwidth occupied by the wideband CQI for the first and/or second TB, and the bitwidth occupied by the CRI. Similarly, for each sub-configuration i of the remaining L-1 sub-configurations other than the second reference sub-configuration, calculating, at the reported rank value $R$, a sum $B_i(R)$ of the bitwidth occupied by the PMI, the bitwidth occupied by the wideband differential CQI for the first and/or second TB, and the bitwidth occupied by CRI. Then, summing $B_i(R)$ of the L=3 sub-configurations to obtain $N_{reported} = \sum_{i=1}^{N} B_i(R)$.

Step 5: the number of padding bits $O_P$ is $O_P = N_{max} - N_{reported}$.

Optionally, the processing method in this embodiment is also applicable to a semi-persistent CSI report for wideband granularity CSI reporting on a PUCCH.

Through the above solution in this embodiment, specifically by clarifying the content included in a periodic CSI report under the Type2 SD adaptation scenario, which includes at least one of the CRI, the COI for the second reference sub-configuration, the wideband differential CQIs for the remaining L-1 sub-configurations other than the second reference sub-configuration, the RI of the second reference sub-configuration, or PMI, and by specifying the mapping rules for the CSI, the payload of multiple sub-configuration CSI within a single CSI report is reduced by using the differential method, thereby ensuring a reasonable CSI reporting content and helping the base station to achieve energy saving.

Eighth Embodiment

Based on any of the above embodiments of the present application, this embodiment further discloses the method for generating and determining a channel state information report under the Type2 SD adaptation scenario.

Optionally, it is assumed that under the Type2 SD adaptation scenario, the number of sub-configurations is L, and an aperiodic CSI report contains CSI corresponding to all N sub-configurations (N<=L). Each of the L sub-configurations has its own CRI, and the CRI for each sub-configuration i is calculated according to the CSI-RS resources corresponding to that sub-configuration.

Optionally, assuming the number of CSI-RS resources corresponding to sub-configuration i is M, a CRI value is selected from M CSI-RS resources. Referring to FIG. 7, optionally, CSI-RS resources which correspond to the same sub-configuration have the same number of antenna ports, density, CDM group, etc.

Optionally, it is assumed that under the Type2 SD adaptation scenario, the L sub-configurations share the same RI, and the shared RI for the L sub-configurations is calculated based on the CSI-RS resources corresponding to the CRI index of the second reference sub-configuration.

Optionally, the second reference sub-configuration is a sub-configuration with the smallest or largest sub-configuration index among the L sub-configurations.

Optionally, the aperiodic CSI report includes two parts: CSI part 1 and CSI part 2.

Optionally, Part 1 of the aperiodic CSI report contains at least one of: a Sub-configuration index (sub-configuration index), CRIs of N sub-configurations (if reported), an RI of the second sub-configuration (if reported), wideband CQIs for the first TBs of the N sub-configurations (if reported).

Optionally, the sub-configuration index can be represented as a combination of sub-configuration indices, such as {starting sub-configuration index, ending sub-configuration index}. Optionally, when the indices of the N sub-configurations in an aperiodic CSI report are consecutive, the sub-configuration indices can be reported in a format of {starting sub-configuration index, ending sub-configuration index}.

Optionally, it is assumed that the CSI report type is an aperiodic CSI report, codebookType (codebook type) is typel-SinglePanel, pmi-FormatIndicator is set to widebandPMI, cqi-Formatindicator is set to widebandCQI, and the sub-configuration indices are reported via an index combination {starting sub-configuration index, ending sub-configuration index}. If the second reference sub-configuration is sub-configuration #1, the content contained in Part 1 of a CSI report containing N sub-configurations is as shown in Table 22.

Table 22 Third example table of content in Part 1 of CSI Report containing N sub-configurations

| Channel state information report number | CSI fields |
|---|---|
| CSI report #n<br><br>CSI part 1 | Starting sub-configuration index in N sub-configurations |
| | Ending sub-configuration index in N sub-configurations |
| | CRI of second reference sub-configuration (if reported) |
| | CRI of sub-configuration #2 (if reported) |
| | ... |
| | CRI of sub-configuration #N (if reported) |
| | RI of second reference sub-configuration (if reported) |
| | Wideband CQI for first TB of second reference sub-configuration (if reported) |
| | Wideband CQI for first TB of sub-configuration #2 (if reported) |
| | ... |
| | Wideband CQI for first TB of sub-configuration #N (if reported) |

Optionally, the starting sub-configuration index and the ending sub-configuration index for the N sub-configurations can be encoded separately or jointly.

Optionally, the bitwidths occupied by the starting sub-configuration index and the ending sub-configuration index among the N sub-configurations can be found in Table 11 and Table 12.

Optionally, it is assumed that the CSI report type is an aperiodic CSI report, codebookType is type1-SinglePanel, pmi-Formatindicator is set to widebandPMI, cqi-Formatindicator is set to widebandCQI, and the indices of the N sub-configurations are reported one by one. If the first reference sub-configuration is sub-configuration #1, the content contained in Part 1 of a CSI report containing N sub-configurations is as shown in Table 23.

Table 23 Fourth example table of content in Part 1 of CSI Report containing N sub-configurations

| Channel state information report number | CSI fields |
|---|---|
| CSI report #n<br><br>CSI part 1 | Sub-configuration index of second reference sub-configuration |
| | Sub-configuration index of sub-configuration #2 |
| | ... |
| | Sub-configuration index of sub-configuration #N |
| | CRI of second reference sub-configuration (if reported) |
| | CRI of sub-configuration #2 (if reported) |
| | ... |
| | CRI of sub-configuration #N (if reported) |
| | RI of second reference sub-configuration (if reported) |
| | Wideband CQI for first TB of second reference sub-configuration (if reported) |
| | Wideband CQI for first TB of sub-configuration #2 (if reported) |
| | ... |
| | Wideband CQI for first TB of sub-configuration #N (if reported) |

Optionally, Part 2 of the aperiodic CSI report contains at least one of: wideband CQIs for the second TBs of the N sub-configurations (if reported), or wideband PMIs of the N sub-configurations (if reported).

Optionally, the content contained in Part 2 of the aforementioned CSI report containing L sub-configurations is as shown in Table 24.

Table 24 Example table of content in Part 2 of CSI Report containing L sub-configurations

| Channel state information report number | CSI fields |
|---|---|
| CSI report #n<br>CSI part 2 | Wideband CQI for second TB of second reference sub-configuration (if reported) |
| | Wideband CQI for second TB of sub-configuration #2 (if reported) |
| | ... |
| | Wideband CQI for second TB of sub-configuration #N (if reported) |
| | PMI wideband information fields X1 of second reference sub-configuration (if reported) |
| | PMI wideband information fields X2 of second reference sub-configuration (if reported) |
| | PMI wideband information fields X1 of sub-configuration #2 (if reported) |
| | PMI wideband information fields X2 of sub-configuration #2 (if reported) |
| | PMI wideband information fields X1 of sub-configuration #N (if reported) |
| | PMI wideband information fields X2 of sub-configuration #N (if reported) |

Optionally, the bitwidth occupied by the PMI of sub-configuration i can be found in Table 4 or Table 5.

Optionally, the processing method in this embodiment is also applicable to a semi-persistent CSI report for CSI reporting on a PUSCH.

Through the above solution in this embodiment, specifically by clarifying the content included in an aperiodic CSI report and a semi-persistent CSI report transmitted on the PUSCH under the Type2 SD adaptation scenario, which includes at least one of the CRI, the CQI, the RI of the second reference sub-configuration, or the PMI, and by specifying the mapping rules for the CSI, a method is provided to enable a single channel state information report to contain multiple channel state information for different spatial domain modes, which avoids separately reporting multiple channel state information for different spatial domain modes, and thus improves transmission efficiency and/or saves resources.

Ninth Embodiment

Based on any of the above embodiments of the present application, this embodiment further discloses the method for generating and determining a channel state information report under the Type2 SD adaptation scenario.

Optionally, it is assumed that under the Type2 SD adaptation scenario, a periodic CSI report contains CSI corresponding to all L sub-configurations. Each of the L sub-configurations has its own CRI, and the CRI for each sub-configuration i is calculated according to the CSI-RS resources corresponding to that sub-configuration i.

Optionally, it is assumed that the number of CSI-RS resources corresponding to sub-configuration i is M, a CRI value is selected from M CSI-RS resources. Referring to FIG. 7, optionally, CSI-RS resources which correspond to the same sub-configuration have the same number of antenna ports, density, CDM group, etc.

Optionally, it is assumed that under the Type2 SD adaptation scenario, the L sub-configurations share the same RI, and the shared RI for the L sub-configurations is calculated based on the CSI-RS resources corresponding to the CRI index of the second reference sub-configuration.

Optionally, the second reference sub-configuration is a sub-configuration with the smallest or largest sub-configuration index among the L sub-configurations.

Optionally, the aperiodic CSI report includes two parts: CSI part 1 and CSI part 2.

Optionally, Part 1 of the aperiodic CSI report contains at least one of: a Sub-configuration index (sub-configuration index), CRIs of the N sub-configurations (if reported), an RI of the second reference sub-configuration (if reported), a wideband CQI for the first TB of the second reference sub-configuration (if reported), or wideband differential CQIs for the first TBs of the remaining N-1 sub-configurations (if reported).

Optionally, the sub-configuration index can be a combination of sub-configuration indices, such as {starting sub-configuration index, ending sub-configuration index}. Optionally, when the indices of the N sub-configurations in an aperiodic CSI report are consecutive, the sub-configuration indices can be reported in a format of {starting sub-configuration index, ending sub-configuration index}.

Optionally, it is assumed that the CSI report type is an aperiodic CSI report, codebookType (codebook type) is typeI-SinglePanel, pmi-FormatIndicator is set to widebandPMI, cqi-FormatIndicator is set to widebandCQI, and the sub-configuration indices of the N sub-configurations are reported via an index combination {starting sub-configuration index, ending sub-configuration index}. If the second reference sub-configuration is sub-configuration #1, and the indices of the N sub-configurations reported are sub-configuration #1 to sub-configuration #N, the content contained in Part 1 of a CSI report containing the L sub-configurations is as shown in Table 25.

Table 25 Example table of content in Part 1 of CSI Report containing L sub-configurations

| Channel state information report number | CSI fields |
|---|---|
| CSI report #n<br><br>CSI part 1 | Starting sub-configuration index in N sub-configurations |
| | Ending sub-configuration index in N sub-configurations |
| | CRI of second reference sub-configuration (if reported) |
| | CRI of sub-configuration #2 (if reported) |
| | ... |
| | CRI of sub-configuration #N (if reported) |
| | RI of second reference sub-configuration (if reported) |
| | Wideband CQI for first TB of second reference sub-configuration (if reported) |
| | Wideband differential CQI for first TB of sub-configuration #2 (if reported) |
| | ... |
| | Wideband differential CQI for first TB of sub-configuration #N (if reported) |

Optionally, the 2-bit wideband differential CQI in Table 25 is interpreted as follows:

Offset value level of sub-configuration i = the wideband CQI index (of the first and/or second TB) of sub-configuration i - the wideband CQI index (of the first and/or second TB) of the first reference sub-configuration.

Optionally, for the mapping relationship between the offset value level of the sub-configuration and its wideband differential CQI, reference can be made to Table 9.
Optionally, the bitwidths occupied by the starting sub-configuration index and the ending sub-configuration index among the N sub-configurations can be found in Table 11 and Table 12.
Optionally, it is assumed that the CSI report type is an aperiodic CSI report, codebookType is typeI-SinglePanel, pmi-Formatindicator is set to widebandPMI, cqi-Formatindicator is set to widebandCQI, and the indices of the N sub-configurations are reported one by one. If the first reference sub-configuration is sub-configuration #1, the content contained in Part 1 of a CSI report containing N sub-configurations is as shown in Table 26.

Table 26 Second example table of content in Part 1 of CSI Report containing N sub-configurations

| Channel state information report number | CSI fields |
|---|---|
| CSI report #n<br><br>CSI part 1 | Sub-configuration index of second reference sub-configuration |
| | Sub-configuration index of sub-configuration #2 |
| | ... |
| | Sub-configuration index of sub-configuration #N |
| | CRI of second reference sub-configuration (if reported) |
| | CRI of sub-configuration #2 (if reported) |
| | ... |
| | CRI of sub-configuration #N (if reported) |
| | RI of second reference sub-configuration (if reported) |
| | Wideband CQI for first TB of second reference sub-configuration (if reported) |
| | Wideband differential CQI for first TB of sub-configuration #2 (if reported) |
| | ... |

(continued)

| Channel state information report number | CSI fields |
|---|---|
| | Wideband differential CQI for first TB of sub-configuration #N (if reported) |

Optionally, Part 2 of the aperiodic CSI report contains at least one of: a wideband CQI for the second TB of the second reference sub-configuration (if reported), wideband differential CQIs for the second TBs for the remaining N-1 sub-configurations, or wideband PMIs of the N sub-configurations (if reported).

Optionally, the content contained in Part 2 of the aforementioned CSI report containing N sub-configurations is as shown in Table 27.

Table 27 Example table of content in Part 2 of CSI Report containing N sub-configurations

| Channel state information report number | CSI fields |
|---|---|
| CSI report #n CSI part 2 | Wideband CQI for second TB of second reference sub-configuration (if reported) |
| | Wideband differential CQI for second TB of sub-configuration #2 (if reported) |
| | ... |
| | Wideband differential CQI for second TB of sub-configuration #N (if reported) |
| | PMI wideband information fields X1 of second reference sub-configuration (if reported) |
| | PMI wideband information fields X2 of second reference sub-configuration (if reported) |
| | PMI wideband information fields X1 of sub-configuration #2 (if reported) |
| | PMI wideband information fields X2 of sub-configuration #2 (if reported) |
| | ... |
| | PMI wideband information fields X1 of sub-configuration #N (if reported) |
| | PMI wideband information fields X2 of sub-configuration #N (if reported) |

Optionally, the bitwidth occupied by the PMI of sub-configuration i can be found in Table 4 or Table 5.

Optionally, the processing method in this embodiment is also applicable to a semi-persistent CSI report for CSI reporting on a PUSCH.

Through the above solution in this embodiment, specifically by clarifying the content included in an aperiodic CSI report under the Type2 SD adaptation scenario, which includes at least one of the CRI, the COI, the RI of the second reference sub-configuration, or the PMI, and by specifying the mapping rules for the CSI, the payload of multiple sub-configuration CSI within a single CSI report is reduced by using the differential method, thereby ensuring a reasonable CSI reporting content and helping the base station to achieve energy saving.

Tenth Embodiment

Based on any of the above embodiments of the present application, this embodiment further discloses the processing method in the above embodiments.

Referring to FIG. 8, which is a schematic flowchart a processing method according to a tenth embodiment, the processing method further includes the following step:

S101, reporting a channel state information report according to a reporting priority value.

Optionally, the channel state information report is determined through the step S1, and the specific implementation process can be found in any of the above embodiments, which will not be repeated here.

Optionally, the reporting priority value is related to the spatial domain adaptation scenario type.

Optionally, the reporting priority value satisfies a first rule.

Optionally, the priority value associated with a CSI report is determined by $Pri_{iCSI}(y,k,c,s,z)$ $=2 \cdot N_{cells} \cdot M_s \cdot y \cdot z + N_{cells} \cdot M_s \cdot k + M_s \cdot c + s + z$; if a value associated with a first report, $Pri_{iCSI}(y,k,c,s,z)$, is lower than that of a second report, then the first CSI report is prioritized over the second CSI report.

Optionally, for an aperiodic CSI report carried on a PUSCH, y=0.

Optionally, for a semi-persistent CSI report carried on a PUSCH, y=1.

Optionally, for a semi-persistent CSI report carried on a PUCCH, y=2.

Optionally, for a periodic CSI report carried on a PUCCH, y=3.

Optionally, for a CSI report carried in the Type1 SD or Type2 SD adaptation scenario, z=0.

Optionally, for a CSI report carried in a traditional scenario, z=1.

Optionally, for a CSI report carrying L1-RSRP or L1-SINR, k=0.

Optionally, for a CSI report not carrying L1-RSRP or L1-SINR, k=1.

Among them, c is a serving cell index, and $N_{cells}$ is a value of a higher layer parameter maxNrofServingCells.

Among them, s is reportConfigID, and $M_s$ is a value of a higher layer parameter maxNrofCSI-ReportConfigurations.

Optionally, it is assumed that the CSI report does not carry L1-RSRP or L1-SINR, and thus k=1, the serving cell index c=0, the report configuration identifier is 1, the $M_s$ corresponding to the higher layer parameter maxNrofCSI-ReportConfigurations is 4, the higher layer parameter $N_{cells}$ is 8, and for two conflicting CSI reports at a same reporting occasion, one is a periodic CSI report for a Type1 SD adaptation scenario and the other is an aperiodic CSI report for a traditional scenario. Then, it is can be obtained according to the calculation formula for the priority value that: $Pri_{iCSI}(y,k,c,s,z)=2 \cdot N_{cells} \cdot M_s \cdot y \cdot z + N_{cells} \cdot M_s \cdot k + M_s \cdot c + s + z$ =2*8*4*y*z+8*4*1+4*0+1=64*y*z+33+z. Therefore, the priority value for the periodic CSI report of the Type1 SD adaptation scenario is 64*3*0+33 +0=33, and the priority value for the aperiodic CSI report of the traditional scenario is 64*0*1+33+1=34. Thus, the periodic CSI report of the Type1 SD adaptation scenario is prioritized to report.

Through the above solution in this embodiment, the channel state information report is specifically reported according to the reporting priority value. The spatial domain adaptation scenario type is associated with the reporting priority value, the reporting priority value is determined according to the first rule, and then the priority for reporting the channel state information report is determined according to the reporting priority value. In this way, the important channel state information reports are ensured to be reported firstly and transmission efficiency is improved.

Eleventh Embodiment

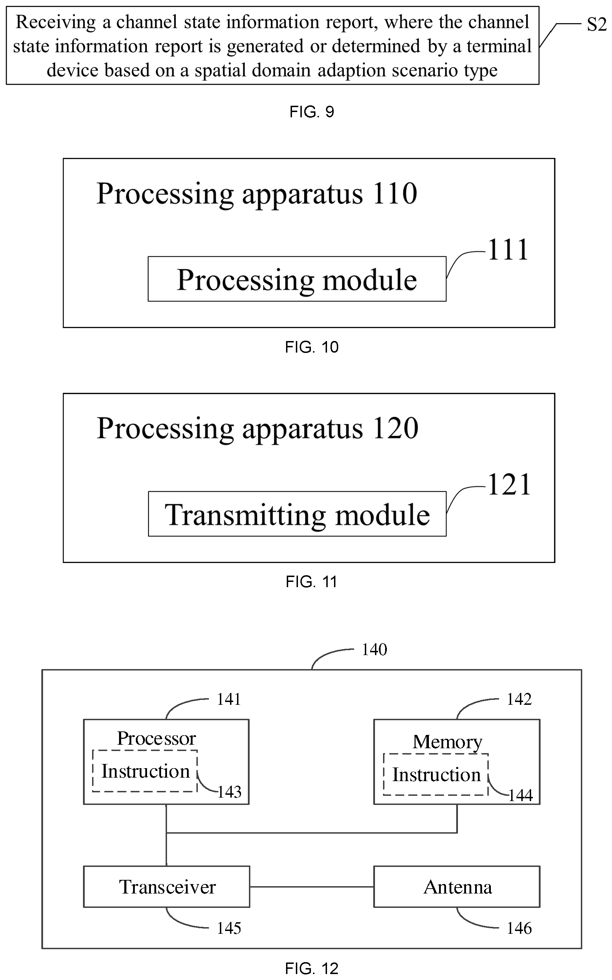

Referring to FIG. 9, FIG. 9 is a schematic flowchart of a processing method according to an eleventh embodiment. The method of this embodiment of the present application may be applied to a network device (for example, a base station), and includes the following step:

S2, receiving a channel state information report, where the channel state information report is generated or determined by a terminal device based on a spatial domain adaption scenario type.

Optionally, the spatial domain adaptation scenario type includes a Type1 spatial domain (Type1 SD) adaptation scenario and/or a Type2 spatial domain (Type2 SD) adaptation scenario.

Optionally, for a Type1 SD adaption scenario, a spatial domain adaption mode corresponds to a specific number of CSI-RS antenna ports.

Optionally, for a Type2 SD adaption scenario, a spatial domain adaption mode corresponds to a way of disabling antenna elements mapped to logical antenna ports.

Optionally, in a case, a spatial domain adaption mode is denoted as A and another spatial domain adaption mode is denoted as B, and it is assumed that each antenna port of A and B corresponds to two antenna elements. For the antenna elements corresponding to logical antenna ports of A and B, disabled positions of antenna elements corresponding to at least one antenna port are different. Thus, assuming the disabled antenna elements of antenna port X of A and B are different, then, if A disables antenna element #1 of the antenna port X, then B disables antenna element #2 of the antenna port X.

Optionally, a spatial domain adaptation mode corresponds to a sub-configuration.

Optionally, the channel state information report includes channel state information of at least one sub-configuration and/or zero padding bits.

Optionally, the sub-configuration includes a first preset number of sub-configurations and/or a second preset number of sub-configurations. In the embodiments of the present application, the first preset number is denoted as L, and the second preset number is denoted as N for explanation.

Optionally, the channel state information report includes channel state information of at least one sub-configuration and/or zero padding bits.

Optionally, the channel state information includes at least one of a CRI, a RI, wideband PMI indicator information, a wideband COI for the first TB, a wideband COI for the second TB, or a sub-configuration index.

Optionally, the first preset number of sub-configurations include a first reference sub-configuration and/or a second reference sub-configuration.

Optionally, the second preset number of sub-configurations include a first reference sub-configuration and/or a second reference sub-configuration.

Optionally, the sub-configuration index includes at least one of a starting sub-configuration index, an ending sub-configuration index, or each sub-configuration index for the second preset number of sub-configurations.

Optionally, the first reference sub-configuration is a sub-configuration having the largest number of channel state information-reference signal resource indicator antenna ports among the first preset number of sub-configurations.

Optionally, the second reference sub-configuration is a sub-configuration with the smallest or largest sub-configuration index among the first preset number of sub-configurations.

Optionally, the first preset number L and/or the second preset number N is a positive integer.

Optionally, the second preset number N is less than or equal to the first preset number L.

Optionally, the number of zero padding bits is related to the number of information bits reported by each sub-configuration in the first preset number of sub-configurations and the second preset number of sub-configurations.

Optionally, the number of information bits reported by each sub-configuration is related to the number of bits of a channel state information-reference signal resource indicator corresponding to that sub-configuration.

Optionally, the wideband channel quality indicator for the first transport block includes at least one of the following:

> a wideband channel quality indicator for the first transport block of the first reference sub-configuration or the second reference sub-configuration;
>
> wideband channel quality indicators for the first transport blocks of other sub-configurations other than the first reference sub-configuration or the second reference sub-configuration;
>
> wideband channel quality indicators for the first transport blocks of the first preset number of sub-configurations or the second preset number of sub-configurations.

Optionally, the network device receives the channel state information report.

Optionally, the channel state information report is reported by the terminal device according to a reporting priority value.

Optionally, the channel state information report is associated with the spatial domain adaption scenario type.

Optionally, during a process of the terminal device reporting the channel state information report, if there are multiple channel state information reports, a reporting priority value associated with each channel state information report needs to be determined, and then each channel state information report is reported according to the reporting priority value.

Optionally, the reporting priority value is related to the spatial domain adaptation scenario type.

Optionally, the reporting priority value satisfies a first rule.

Optionally, the first rule may be a calculation formula for the reporting priority value.

Through the above solution in this embodiment, specifically by receiving a channel state information report by the network device, which is generated or determined by the terminal device based on a spatial domain adaptation scenario type, the network is enabled to obtain multiple channel state information for different spatial domain modes from a single channel state information report, thereby improving transmission efficiency and/or saving resources.

Please refer to FIG. 10, which is a first schematic structural diagram of a processing apparatus provided by an embodiment of the present application. This apparatus can be disposed on, or can be, the terminal device in the above method embodiments. The processing apparatus shown in FIG. 10 can be configured to perform part or all of the functions described in the method embodiments above. As shown in FIG. 10, the processing apparatus 110 includes:

a processing module 111, configured to generate or determine a channel state information report based on a spatial domain adaption scenario type.

Optionally, the spatial domain adaptation scenario type includes a Type1 spatial domain adaptation scenario and/or a Type2 spatial domain adaptation scenario.

Optionally, the channel state information report includes channel state information of at least one sub-configuration and/or zero padding bits.

Optionally, the sub-configuration includes a first preset number of sub-configurations and/or a second preset number of sub-configurations.

Optionally, the channel state information includes at least one of a channel state information-reference signal resource indicator, a rank indicator, wideband precoding matrix indicator information, a wideband channel quality indicator for the first transport block, a wideband channel quality indicator for the second transport block, or a sub-configuration index.

Optionally, the apparatus further includes at least one of the following:

> the first preset number of sub-configurations include a first reference sub-configuration and/or a second reference sub-configuration;
>
> the second preset number of sub-configurations include a first reference sub-configuration and/or a second reference sub-configuration;

the sub-configuration index includes at least one of a starting sub-configuration index, an ending sub-configuration index, or each sub-configuration index for the second preset number of sub-configurations;

the first reference sub-configuration is a sub-configuration having a largest number of channel state information-reference signal resource indicator antenna ports among the first preset number of sub-configurations;

the second reference sub-configuration is a sub-configuration with a smallest or largest sub-configuration index among the first preset number of sub-configurations;

the first preset number and/or the second preset number is a positive integer;

the second preset number is less than or equal to the first preset number;

the number of zero padding bits is related to the number of information bits reported by each sub-configuration in the first preset number of sub-configurations and the second preset number of sub-configurations;

the number of information bits reported by each sub-configuration is related to the number of bits of a channel state information-reference signal resource indicator corresponding to that sub-configuration.

Optionally, the wideband channel quality indicator for the first transport block includes at least one of the following:

a wideband channel quality indicator for the first transport block of the first reference sub-configuration or the second reference sub-configuration;

wideband differential channel quality indicators for the first transport blocks of other sub-configurations other than the first reference sub-configuration or the second reference sub-configuration;

wideband channel quality indicators for the first transport blocks of the first preset number of sub-configurations or the second preset number of sub-configurations.

Optionally, the apparatus further includes:

reporting the channel state information report according to a reporting priority value.

Optionally, the reporting priority value is related to the spatial domain adaption scenario type, and/or, the reporting priority value satisfies a first rule.

The processing apparatus provided by the embodiments of the present application can execute the technical solutions shown in the aforementioned method embodiments. Their implementation principles and effective effects are similar and will not be repeated here.

Please refer to FIG. 11, FIG. 11 is a second schematic structural diagram of a processing apparatus provided by an embodiment of the present application. This apparatus can be disposed on, or can be, the network device in the above method embodiments. As shown in FIG. 11, the processing apparatus 120 includes:

a transmitting module 121, configured to receive a channel state information report, where the channel state information report is generated or determined by a terminal device based on a spatial domain adaption scenario type.

Optionally, the spatial domain adaptation scenario type includes a Type1 spatial domain adaptation scenario and/or a Type2 spatial domain adaptation scenario.

Optionally, the channel state information report includes channel state information of at least one sub-configuration and/or zero padding bits.

Optionally, the sub-configuration includes a first preset number of sub-configurations and/or a second preset number of sub-configurations.

Optionally, the channel state information includes at least one of a channel state information-reference signal resource indicator, a rank indicator, wideband precoding matrix indicator information, a wideband channel quality indicator for the first transport block, a wideband channel quality indicator for the second transport block, or a sub-configuration index.

Optionally, the channel state information report is reported by the terminal device according to a reporting priority value.

Optionally, at least one of the following is further included:

the first preset number of sub-configurations include a first reference sub-configuration and/or a second reference sub-configuration;

the second preset number of sub-configurations include a first reference sub-configuration and/or a second reference sub-configuration;

a sub-configuration index includes at least one of a starting sub-configuration index, an ending sub-configuration index, or each sub-configuration index for the second preset number of sub-configurations;

the first reference sub-configuration is a sub-configuration having a largest number of channel state information-reference signal resource indicator antenna ports among the first preset number of sub-configurations;

the second reference sub-configuration is a sub-configuration with a smallest or largest sub-configuration index among the first preset number of sub-configurations;

the first preset number and/or the second preset number is a positive integer;

the second preset number is less than or equal to the first preset number;

the number of zero padding bits is related to the number of information bits reported by each sub-configuration in the first preset number of sub-configurations and the second preset number of sub-configurations;

the number of information bits reported by each sub-configuration is related to the number of bits of a channel state information-reference signal resource indicator corresponding to that sub-configuration.

Optionally, the wideband channel quality indicator for the first transport block includes at least one of the following:

a wideband channel quality indicator for the first transport block of the first reference sub-configuration or the second reference sub-configuration;

wideband differential channel quality indicators for the first transport blocks of other sub-configurations other than the first reference sub-configuration or the second reference sub-configuration;

wideband channel quality indicators for the first transport blocks of the first preset number of sub-configurations or the second preset number of sub-configurations.

Optionally, the reporting priority value is related to the spatial domain adaption scenario type, and/or, the reporting priority value satisfies a first rule.

The processing apparatus provided by the embodiments of the present application can execute the technical solutions shown in the aforementioned method embodiments. Their implementation principles and effective effects are similar and will not be repeated here.

Referring to FIG. 12, FIG. 12 is a schematic structural diagram of a communication device provided by an embodiment of the present application. As shown in FIG. 12, the communication device 140 described in this embodiment may be the terminal device (or a component for use in the terminal device) or the network device (or a component for use in the network device) mentioned in the previous method embodiments. The communication device 140 can be configured to implement the methods corresponding to the terminal device or network device described in the above method embodiments, and details can be found in the description of the above method embodiments.

The communication device 140 may include one or more processors 141, which may also be referred to as processing units, and are capable of implementing certain control or processing functions. The processor 141 may be a general-purpose processor or a dedicated processor, etc. For example, it may be a baseband processor or a central processing unit. The baseband processor may be used to process communication protocols and communication data. The central processing unit may be used to control the communication device, execute software programs, and process data in the software programs.

Optionally, the processor 141 may also store instructions 143 or data (for example, intermediate data). Optionally, the instructions 143 may be executed by the processor 141, enabling the communication device 140 to perform the methods corresponding to the terminal device or network device described in the aforementioned method embodiments.

Optionally, the communication device 140 may include a circuit that can implement the functions of transmitting, receiving, or communicating described in the aforementioned method embodiments.

Optionally, the communication device 140 may include one or more memories 142 on which the instructions 144 may be stored. The instructions may be executed on the processor 141, enabling the communication device 140 to perform the methods described in the aforementioned method embodiments.

Optionally, data may also be stored in the memory 142. The processor 141 and the memory 142 may be set separately or integrated together.

Optionally, the communication device 140 may further include a transceiver 145 and/or an antenna 146. The processor 141 may be referred to as a processing unit, controlling the communication device 140 (a terminal device, a core network device, or a wireless access network device). The transceiver 145 may be referred to as a transceiver unit, a transceiver, a transceiver circuit, or the like, configured to implement the transmitting and receiving functions of the communication device 140.

Optionally, if the communication device 140 is configured to implement the operations corresponding to the terminal device in the above embodiments, for example, the transceiver 145 may receive downlink information, and the processor 141 may generate or determine the channel state information report based on the spatial domain adaptation scenario type.

Optionally, the specific implementation process of the processor 141 and the transceiver 145 can be found in in the relevant descriptions of the above embodiments and will not be repeated here.

Optionally, if the communication device 140 is configured to implement the operations corresponding to the network device in the above embodiments, for example, the transceiver 145 may receive the channel state information report, where the channel state information report is generated or determined by the terminal device based on the spatial domain adaption scenario type.

Optionally, the specific implementation process of the processor 141 and the transceiver 145 can be found in in the relevant descriptions of the above embodiments and will not be repeated here.

The processor 141 and the transceiver 145 described in the present application can be implemented on an IC (Integrated Circuit, Integrated Circuit), analog integrated circuit, RFIC (Radio Frequency Integrated Circuit, Radio Frequency Integrated Circuit), mixed-signal integrated circuit, ASIC (Application Specific Integrated Circuit, Application Specific Integrated Circuit), PCB (Printed Circuit Board, Printed Circuit Board), electronic device, etc. The processor 141 and the transceiver 145 can also be manufactured using various integrated circuit process technologies, for example, a CMOS (Complementary Metal-Oxide Semiconductor, Complementary Metal-Oxide Semiconductor), an NMOS (N Metal-Oxide Semiconductor, N Metal-Oxide Semiconductor), a PMOS (Positive channel Metal Oxide Semiconductor, Positive channel Metal Oxide Semiconductor), a BJT (Bipolar Junction Transistor, Bipolar Junction Transistor), a Bipolar CMOS (BiCMOS), Silicon Germanium (SiGe), Gallium Arsenide (GaAs), etc.

The communication device in the present application may be a terminal device (for example, a mobile phone) or a network device (for example, a base station). The specific reference should be clarified based on the context. The terminal device may be implemented in various forms. For example, the terminal device described in the present application may include a terminal device such as a mobile phone, a tablet computer, a laptop, a palmtop computer, a personal digital assistant (Personal Digital Assistant, PDA), a portable media player (Portable Media Player, PMP), a navigation apparatus, a wearable device, a smart bracelet, a pedometer, etc., as well as a fixed terminal device such as a digital TV, a desktop computer, etc.

Although in the descriptions of the above embodiments, the communication device is described as a terminal device or network device, the scope of the communication device described in the present application is not limited to the above terminal device or network device, and the structure of the communication device may not be limited by FIG. 12. The communication device may be an independent device or may be part of a larger device.

An embodiment of the present application further provides a communication system, including: the terminal device according to any one of the aforementioned embodiments, and, the network device according to any one of the aforementioned embodiments.

An embodiment of the present application further provides a communication device, including a memory, a processor, and a processing program stored on the memory. When the processing program is executed by the processor, the steps of the processing method according to any one of the above embodiments are implemented.

The communication device in the present application may be a terminal device (for example, a mobile phone) or a network device (for example, a base station). The specific reference should be clarified based on the context.

An embodiment of the present application further provides a storage medium with a processing program stored thereon. When the processing program is executed by a processor, the steps of the processing method according to any one of the above embodiments are implemented.

The embodiments of the communication device and storage medium provided by the embodiments of the present application may include all the technical features of any embodiment of the aforementioned processing method. The description expansion and explanation content are basically the same as those of the various embodiments of the above method and will not be repeated here.

An embodiment of the present application further provides a computer program product which includes computer program code. When the computer program code is run on a computer, the computer is enabled to execute the method according to any one of the various possible implementations described above.

An embodiment of the present application further provides a chip, including a memory and a processor. The memory is used to store a computer program, and the processor is used to invoke and run the computer program in the memory, enabling a device on which the chip is installed to execute the method according to any one of the various possible implementations described above.

It is understood that the above scenarios are only examples and do not constitute limitations on the application scenarios of the technical solutions provided by the embodiments of the present application. The technical solutions of the present application can also be applied to other scenarios. For example, those skilled in the art can understand that with the evolution of system architecture and the emergence of new business scenarios, the technical solutions provided by the embodiments of the present application are equally applicable to similar technical problems.

The sequence numbers of the above embodiments of the present application are for description only and do not represent the superiority or inferiority of the embodiments.

The steps in the method embodiments of the present application can be adjusted in order, merged, and deleted according to actual requirements.

The units in the device embodiments of the present application can be merged, divided, and deleted according to actual requirements.

In the present application, for descriptions of identical or similar term concepts, technical solutions, and/or application scenarios, detailed descriptions are generally provided only upon first occurrence. When they appear again later, they are generally not repeated for brevity. When understanding the technical solutions and other content of the present application, for identical or similar term concepts, technical solutions, and/or application scenario descriptions that are not described in detail later, reference can be made to their previous relevant detailed descriptions.

In the present application, the descriptions of the various embodiments each have their own emphasis. For parts not described or recorded in detail in a certain embodiment, reference can be made to the relevant descriptions of other embodiments.

The technical features of the technical solutions of the present application can be combined arbitrarily. To keep the description concise, not all possible combinations of the various technical features in the above embodiments have been described. However, as long as there is no contradiction in the combination of these technical features, they should be considered as falling within the scope recorded in the present application.

Through the description of the above implementations, those skilled in the art can clearly understand that the methods in the above embodiments can be implemented by means of software plus a necessary general hardware platform, and of course, can also be implemented by hardware. In many cases, the former is a better implementation. Based on this understanding, the technical solution of the present application in essence or the part contributing to the prior art can be embodied in the form of a software product. The computer software product is stored in a storage medium as above (for example, ROM/RAM, magnetic disk, optical disc), including several instructions for causing a terminal device (which may be a mobile phone, a computer, a server, a controlled terminal device, or a network device, etc.) to execute the method of each embodiment of the present application.

In the aforementioned embodiments, implementation may be entirely or partially through software, hardware, firmware, or a combination thereof. When implemented in software, it may be entirely or partially embodied as a computer program product. The computer program product includes one or more computer instructions. When loaded and executed on a computer, the computer program instructions entirely or partially generate the processes or functions according to the embodiments of the present application. The computer may be a general-purpose computer, a special-purpose computer, a computer network, or other programmable apparatuses. The computer instructions may be stored in a storage medium or transmitted from one storage medium to another storage medium. For example, the computer instructions may be transmitted from a website site, a computer, a server, or a data center to another website site, computer, server, or data center via wired means (for example, coaxial cable, optical fiber, digital subscriber line) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid state disk, Solid State Disk (SSD)), etc.

The above descriptions are only preferred embodiments of the present application and do not limit the patent scope of the present application. Any equivalent structure or equivalent process transformation made using the content of the description and drawings of the present application, or any direct or indirect application to other related technical fields, shall similarly be included within the scope of patent protection of the present application.

## Claims

1. A processing method, comprising a step of:
   S1, generating or determining a channel state information report based on a spatial domain adaption scenario type.

2. The method according to claim 1, further comprising at least one of the following:

   the spatial domain adaption scenario type comprises a Type1 spatial domain adaptation scenario and/or a Type2 spatial domain adaptation scenario;
   the channel state information report comprises channel state information of at least one sub-configuration and/or zero padding bits.

3. The method according to claim 2, wherein the sub-configuration comprises a first preset number of sub-configurations and/or a second preset number of sub-configurations; and/or, the channel state information comprises at least one of a channel state information-reference signal resource indicator, a rank indicator, wideband precoding matrix indicator information, a wideband channel quality indicator for a first transport block, a wideband channel quality indicator for a second transport block, or a sub-configuration index.

**4.** The method according to claim 3, further comprising at least one of the following:

the first preset number of sub-configurations comprise a first reference sub-configuration and/or a second reference sub-configuration;

the second preset number of sub-configurations comprise a first reference sub-configuration and/or a second reference sub-configuration;

the sub-configuration index comprises at least one of a starting sub-configuration index, an ending sub-configuration index, or each sub-configuration index for the second preset number of sub-configurations;

a first reference sub-configuration is a sub-configuration having a largest number of channel state information-reference signal resource indicator antenna ports among the first preset number of sub-configurations;

a second reference sub-configuration is a sub-configuration with a smallest or largest sub-configuration index among the first preset number of sub-configurations;

the first preset number and/or the second preset number is a positive integer;

the second preset number is less than or equal to the first preset number;

the number of zero padding bits is related to the number of information bits reported by each sub-configuration in the first preset number of sub-configurations and the second preset number of sub-configurations;

the number of information bits reported by each sub-configuration is related to the number of bits of a channel state information-reference signal resource indicator corresponding to the sub-configuration.

**5.** The method according to claim 4, wherein the wideband channel quality indicator for the first transport block comprises at least one of the following:

a wideband channel quality indicator for a first transport block of the first reference sub-configuration or the second reference sub-configuration;

wideband differential channel quality indicators for other sub-configurations other than the first reference sub-configuration or the second reference sub-configuration;

wideband channel quality indicators for first transport blocks of the first preset number of sub-configurations or the second preset number of sub-configurations.

**6.** The method according to any one of claims 1 to 5, after step S1, further comprising:
reporting the channel state information report according to a reporting priority value.

**7.** The method according to claim 6, wherein the reporting priority value is related to the spatial domain adaption scenario type, and/or, the reporting priority value satisfies a first rule.

**8.** A processing method, comprising a step of:
S2, receiving a channel state information report, wherein the channel state information report is generated or determined by a terminal device based on a spatial domain adaption scenario type.

**9.** The method according to claim 8, further comprising at least one of the following:

the spatial domain adaption scenario type comprises a Type1 spatial domain adaptation scenario and/or a Type2 spatial domain adaptation scenario;

the channel state information report comprises channel state information of at least one sub-configuration and/or zero padding bits.

**10.** The method according to claim 9, further comprising at least one of the following:

the sub-configuration comprises a first preset number of sub-configurations and/or a second preset number of sub-configurations;

the channel state information comprises at least one of a channel state information-reference signal resource indicator, a rank indicator, wideband precoding matrix indicator information, a wideband channel quality indicator for a first transport block, a wideband channel quality indicator for a second transport block, or a sub-configuration index;

the channel state information report is reported by the terminal device according to a reporting priority value.

**11.** The method according to claim 10, further comprising at least one of the following:

the first preset number of sub-configurations comprise a first reference sub-configuration and/or a second reference sub-configuration;

the second preset number of sub-configurations comprise a first reference sub-configuration and/or a second reference sub-configuration;

the sub-configuration index comprises at least one of a starting sub-configuration index, an ending sub-configuration index, or each sub-configuration index for the second preset number of sub-configurations;

a first reference sub-configuration is a sub-configuration having a largest number of channel state information-reference signal resource indicator antenna ports among the first preset number of sub-configurations;

a second reference sub-configuration is a sub-configuration with a smallest or largest sub-configuration index among the first preset number of sub-configurations;

the first preset number and/or the second preset number is a positive integer;

the second preset number is less than or equal to the first preset number;

the number of zero padding bits is related to the number of information bits reported by each sub-configuration in the first preset number of sub-configurations and the second preset number of sub-configurations;

the number of information bits reported by each sub-configuration is related to the number of bits of a channel state information-reference signal resource indicator corresponding to the sub-configuration.

12. The method according to claim 11, wherein the wideband channel quality indicator for the first transport block comprises at least one of the following:

a wideband channel quality indicator for a first transport block of the first reference sub-configuration or the second reference sub-configuration;

wideband differential channel quality indicators for other sub-configurations other than the first reference sub-configuration or the second reference sub-configuration;

wideband channel quality indicators for first transport blocks of the first preset number of sub-configurations or the second preset number of sub-configurations.

13. The method according to any one of claims 10 to 12, wherein the reporting priority value is related to the spatial domain adaption scenario type, and/or, the reporting priority value satisfies a first rule.

14. A communication device, comprising: a memory, a processor, and a processing program that is stored on the memory and runnable on the processor, wherein when the processing program is executed by the processor, the steps of the processing method according to any one of claims 1 to 13 are implemented.

15. A storage medium, wherein a computer program is stored in the storage medium, and when the computer program is executed by a processor, the steps of the processing method according to any one of claims 1 to 13 are implemented.

FIG. 1

FIG. 2

FIG. 3

FIG. 4

Generating or determining a channel state information report based on a spatial domain adaption scenario type — S1

FIG. 5

Channel state information-reference signal resource indicator

Reference sub-configuration

| CSI-RS resource index #1 | CSI-RS resource index #2 | ... | CSI-RS resource index #M |

FIG. 6

CRI of sub-configuration 1

Sub-configuration #1

| CSI-RS resource #1 | CSI-RS resource #2 | ... | CSI-RS resource #2M |

CRI of sub-configuration 2

Sub-configuration #2

| CSI-RS resource #(M+1) | CSI-RS resource #(M+2) | ... | CSI-RS resource #2M |

FIG. 7

Generating or determining a channel state information report based on a spatial domain adaption scenario type — S1

Reporting a channel state information report according to a reporting priority value — S101

FIG. 8

Receiving a channel state information report, where the channel state information report is generated or determined by a terminal device based on a spatial domain adaption scenario type — S2

FIG. 9

Processing apparatus 110

Processing module — 111

FIG. 10

Processing apparatus 120

Transmitting module — 121

FIG. 11

— 140

— 141
Processor
Instruction — 143

— 142
Memory
Instruction — 144

Transceiver — 145

Antenna — 146

FIG. 12

## INTERNATIONAL SEARCH REPORT

| | International application No. |
|---|---|
| | **PCT/CN2023/111097** |

**A. CLASSIFICATION OF SUBJECT MATTER**

H04W24/10(2009.01)i

According to International Patent Classification (IPC) or to both national classification and IPC

**B. FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 信道状态信息, 空间域, 空域, 自适应, 索引, 类型, 配置, CSI, Channel State Information, Spatial Domain, SD, CRI, PMI, CQI, index, configuration, adaptation

**C. DOCUMENTS CONSIDERED TO BE RELEVANT**

| Category* | Citation of document, with indication, where appropriate, of the relevant passages | Relevant to claim No. |
|---|---|---|
| X | SAMSUNG. "Techniques in Spatial and Power Domains" *3GPP TSG RAN WG1 #112bis, R1-2303141,* 26 April 2023 (2023-04-26), sections 1-3 | 1-15 |
| X | TRANSSION HOLDINGS. "Discussion of NES Techniques in Spatial and Power Domains" *3GPP TSG RAN WG1 #113, R1-2305710,* 26 May 2023 (2023-05-26), sections 1-2 | 1-15 |
| X | RAN1 (HUAWEI). "Network Energy Savings for NR" *3GPP TSG RAN meeting #100, RP-230914,* 14 June 2023 (2023-06-14), section 2.1 | 1-15 |
| A | US 2022123805 A1 (LG ELECTRONICS, INC.) 21 April 2022 (2022-04-21) entire document | 1-15 |
| A | CN 114826444 A (MEDIATEK SINGAPORE PTE. LTD.) 29 July 2022 (2022-07-29) entire document | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 April 2024** | **10 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111097**

| Patent document cited in search report | | | Publication date (day/month/year) | Patent family member(s) | | | Publication date (day/month/year) |
|---|---|---|---|---|---|---|---|
| US | 2022123805 | A1 | 21 April 2022 | WO | 2020145716 | A1 | 16 July 2020 |
| CN | 114826444 | A | 29 July 2022 | TW | 202232909 | A | 16 August 2022 |
| | | | | US | 2022231740 | A1 | 21 July 2022 |

Form PCT/ISA/210 (patent family annex) (July 2022)